# EUROPEAN PATENT SPECIFICATION

(11) **EP 3 674 054 B1**
(45) Date of publication and mention of the grant of the patent: **26.08.2026**
(21) Application number: 19219823.2
(22) Date of filing: 27.12.2019
(51) Int. Cl.: B29C 45/17, B29C 45/03

(54) **ASSEMBLY METHOD OF INJECTION MOLDING MACHINE AND INJECTION MOLDING MACHINE**
VERFAHREN ZUR MONTAGE EINER SPRITZGIESSMASCHINE UND SPRITZGIESSMASCHINE
PROCÉDÉ D'ASSEMBLAGE DE MACHINE DE MOULAGE PAR INJECTION ET MACHINE DE MOULAGE PAR INJECTION

(30) Priority: 28.12.2018 JP 2018247261
(43) Date of publication of application: 01.07.2020
(73) Proprietor: Sumitomo Heavy Industries, Ltd., Tokyo 141-6025 (JP)
(72) Inventor: ISHII, Yoshihisa, Chiba-shi Chiba 263-0001 (JP); ISHIKAWA, Sosuke, Chiba-shi Chiba 263-0001 (JP); KIMURA, Yuichi, Chiba-shi Chiba 263-0001 (JP)
(74) Representative: Louis Pöhlau Lohrentz

(56) References cited:
- EP-A1- 1 459 863
- EP-A1- 2 977 167
- JP-A- H05 192 956
- US-B1- 6 666 674

## Description

### BACKGROUND OF THE INVENTION

### Field of the Invention

Certain embodiments of the present invention relate to an assembly method of an injection molding machine and an injection molding machine.

### Description of Related Art

An injection molding machine described in Japanese Unexamined Patent Publication No. 2016-022702 includes a mold clamping unit that performs mold closing, mold clamping, and mold opening of a mold unit, a mold clamping unit frame that supports the mold clamping unit, and a plurality of leveling adjusters for adjusting a gap between the mold clamping unit frame and a floor surface. In a case where the floor surface is inclined or uneven, each of the plurality of leveling adjusters adjusts the gap between the mold clamping unit frame and the floor surface such that an upper surface of the mold clamping unit frame is horizontal. European Patent Publication No. 2 977 167 discloses an injection molding machine comprising a level adjuster that adjusts a height of a frame from a floor. Japanese Unexamined Patent Publication No. H05-192956 discloses an injection molding machine that allows for easy storage of large and heavy peripheral equipment related to the injection molding machine in an available space on the machine's platform.

[Patent Document 1] Japanese Unexamined Patent Publication No. 2016-022702
[Patent Document 2] European Patent Publication No. 2 977 167
[Patent Document 3] Japanese Unexamined Patent Publication No. H05-192956

### SUMMARY OF THE INVENTION

The injection molding machine includes a parallelism adjustment portion that adjusts a parallelism of a predetermined surface of the injection molding machine with respect to a reference surface. A specific example of the parallelism adjustment portion includes, for example, the leveling adjuster described above. In the case of the leveling adjuster described above, the reference surface is a horizontal surface.

In the related art, a frequency of work for adjusting the parallelism of the predetermined surface of the injection molding machine with respect to the reference surface is high.

An aspect of the invention provides a technique capable of reducing a frequency of work for adjusting a parallelism of a predetermined surface of an injection molding machine with respect to a reference surface. The technique provided by the invention is defined in the independent claims.

Anassembly method of an injection molding machine according to an aspect of the invention includes a parallelism adjustment step of adjusting a parallelism of a component fixing surface to which the component of the injection molding machine is separably fixed with respect to a reference surface, and a fixing step of separably fixing the component of the injection molding machine on the component fixing surface.

According to an aspect of the invention, it is possible to reduce the frequency of work for adjusting the parallelism of the predetermined surface of the injection molding machine with respect to the reference surface.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a flowchart showing an assembly method of the injection molding machine according to the embodiment.
Fig. 4 is a view showing a parallelism adjustment step according to the embodiment.
Figs. 5A and 5B are cross-sectional views showing a leveling adjuster according to the embodiment.
Figs. 6A and 6B are views showing a positioning step according to the embodiment.
Fig. 7 is a view showing a fixing step according to the embodiment.
Fig. 8 is a view showing a separation step according to the embodiment.
Fig. 9 is a view showing a state in the middle of a re-conveying step according to the embodiment.
Fig. 10 is a view showing a re-fixing step according to the embodiment.
Fig. 11 is a flowchart showing a modification example of the assembly method shown in Fig. 3.
Fig. 12 is a view showing a modification example of a frame mounting portion shown in Fig. 7.
Fig. 13 is a view showing an example of a horizontal injection molding machine body and a frame mounting portion.
Fig. 14 is a flowchart showing an assembly method of an injectionunit and an injectionunit attachment portion according to the embodiment.
Figs. 15A and 15B are views showing a fixed state and a separated state of the injectionunit according to the embodiment.
Figs. 16A and 16B are cross-sectional views showing an adjustment bolt according to the embodiment.
Fig. 17 is a flowchart showing a modification example of the assembly method shown in Fig. 14.
Figs. 18A and 18B are views showing a fixed state and a separated state of an injection unit according to the modification example.

### DETAILED DESCRIPTION OF THE INVENTION

Hereinafter, an embodiment of the present invention will be described with reference to accompanying drawings. In each drawing, the same or corresponding reference numerals are assigned to the same or corresponding configurations, and descriptions thereof are omitted.

### (Injection Molding Machine)

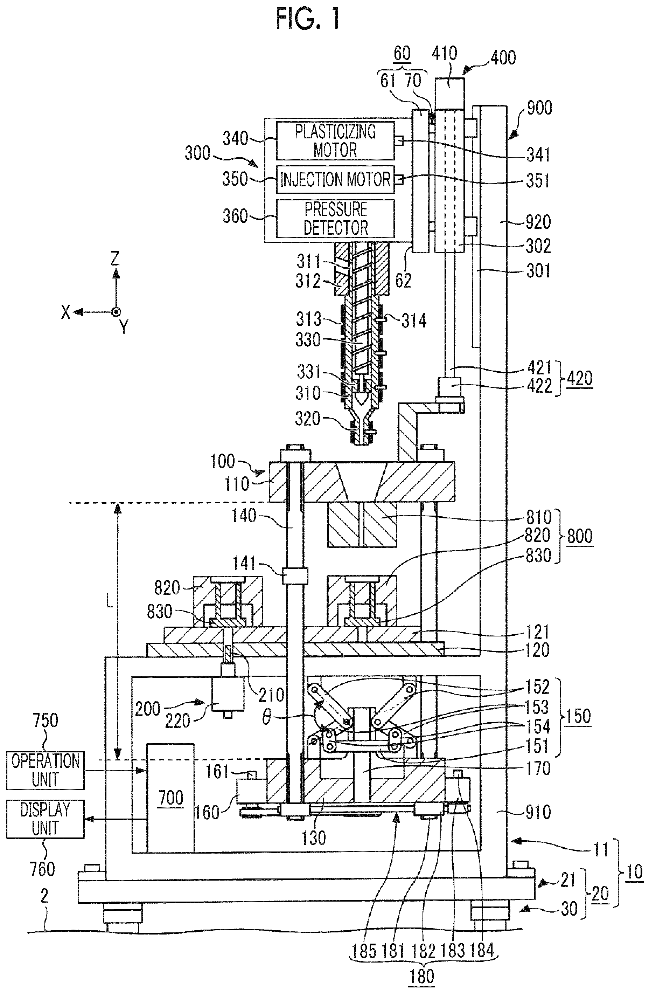

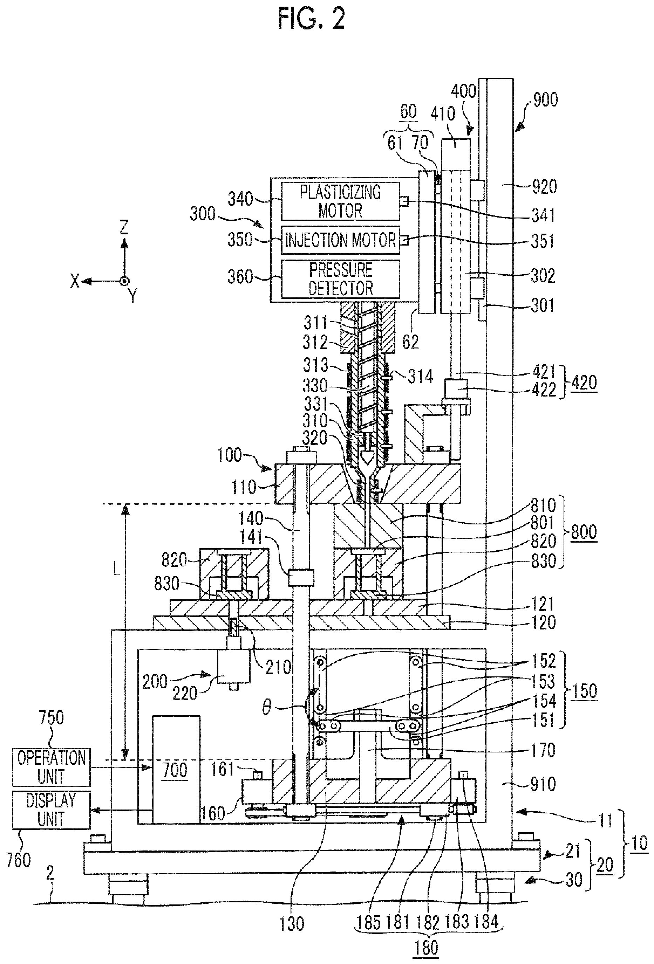

Fig. 1 is a view showing a state when a mold opening of an injection molding machine according to an embodiment is completed. Fig. 2 is a view showing a state when a mold of the injection molding machine according to the embodiment is clamped. In this specification, an X-axis direction, a Y-axis direction, and a Z-axis direction are directions perpendicular to each other. The X-axis direction and the Y-axis direction represent a horizontal direction, and the Z-axis direction represents a vertical direction. In a case where a mold clamping unit 100 is a vertical type, the Z-axis direction is a mold opening and closing direction, the Y-axis direction is a width direction of an injection molding machine 10, and the X-axis direction is a front surface direction of the injection molding machine 10.

The injection molding machine 10 includes an injection molding machine body 11 and a frame mounting portion 20 as shown in Figs. 1 and 2. The frame mounting portion 20 includes amounting portion body 21 having a component fixing surface 22 to which the injection molding machine body 11 is separably fixed and a leveling adjuster 30 that adjusts a parallelism between the component fixing surface 22 of the mounting portion body 21 and a horizontal surface. The leveling adjuster 30 is installed on a floor surface 2. The leveling adjuster 30 is an example of the parallelism adjustment portion described in the claims.

The injection molding machine body 11 includes a mold clamping unit 100, an ejector unit 200, an injection unit 300, a movement unit 400, a controller 700, and a frame 900. The frame 900 includes a mold clamping unit frame 910 that supports the mold clamping unit 100 and an injection unit frame 920 that supports the injection unit 300.

The mold clamping unit frame 910 is installed on the floor surface 2 through the frame mounting portion 20. The controller 700 is disposed in an internal space of the mold clamping unit frame 910. The controller 700 may be disposed in an internal space of a frame different from the mold clamping unit frame 910.

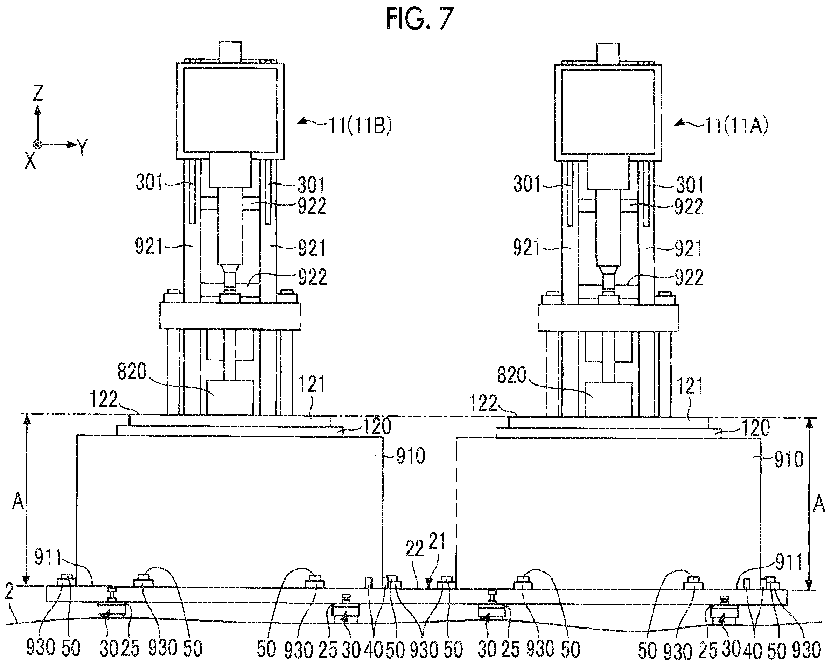

As shown in Fig. 7, the injection unit frame 920 includes two columns 921 extending upward from the mold clamping unit frame 910 and a plurality of beams 922 connecting the two columns 921. The two columns 921 are disposed with an interval in the Y-axis direction. Hereinafter, each component of the injection molding machine 10 will be described.

### (Mold Clamping Unit)

The mold clamping unit 100 performs mold closing, pressurizing, mold clamping, depressurizing, and mold opening of a mold unit 800 as shown in Figs. 1 and 2. The mold unit 800 includes an upper mold 810 and a lower mold 820.

The mold clamping unit 100 is, for example, the vertical type, and the mold opening and closing direction is the vertical direction. The mold clamping unit 100 includes an upper platen 110, a lower platen 120, a toggle support 130, a tie bar 140, a toggle mechanism 150, a mold clamping motor 160, a motion conversion mechanism 170, and a mold space adjustment mechanism 180.

The upper platen 110 is disposed above the lower platen 120 and is movable up and down with respect to the mold clamping unit frame 910. The upper mold 810 is attached to a surface (lower surface) of the upper platen 110 facing the lower platen 120.

The lower platen 120 is fixed to the mold clamping unit frame 910. A plurality of the lower molds 820 are attached to a surface (upper surface) of the lower platen 120 facing the upper platen 110 through a rotary table 121.

The rotary table 121 rotates 180° to cause the lower mold 820 to move between a position facing the upper mold 810 and a position for taking out a molding product. The position for taking out the molding product may also serve as a preparation position for setting an insert member in the lower mold 820.

The lower mold 820 according to the embodiment is attached to the lower platen 120 through the rotary table 121, but may be attached directly to the lower platen 120. Moreover, the number of lower molds 820 is not limited to two and may be one or three or more.

The toggle support 130 is movable up and down with respect to the mold clamping unit frame 910 below the lower platen 120 and is connected to the upper platen 110. The toggle support 130 is moved up and down to cause the upper platen 110 to move up and down.

The upper platen 110 and the toggle support 130 are connected to each other with a gap L in the mold opening and closing direction by the tie bar 140. A plurality of (for example, three) tie bars 140 may be used. The plurality of tie bars 140 are disposed in parallel in the mold opening and closing direction and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

The tie bar strain detector 141 is used as a mold clamping force detector which detects the mold clamping force in the embodiment. However, the invention is not limited thereto. The mold clamping force detector is not limited to a strain gauge type detector and may be a piezoelectric type detector, a capacitance type detector, a hydraulic type detector, an electromagnetic type detector, or the like. An attachment position of the mold clamping force detector is also not limited to the tie bar 140.

The toggle mechanism 150 is disposed between the lower platen 120 and the toggle support 130, and causes the toggle support 130 to move up and down with respect to the lower platen 120. The toggle mechanism 150 is configured of a crosshead 151, a pair of link groups, and the like. The pair of link groups includes respectively a first link 152 and a second link 153 which are bendably and stretchably connected to each other by pins or the like. The first link 152 is oscillatingly attached to the lower platen 120 by pins or the like. The second link 153 is oscillatingly attached to the toggle support 130 by pins or the like. The second link 153 is attached to the crosshead 151 through a third link 154. When the crosshead 151 is moved up and down relatively with respect to the toggle support 130, the first link 152 and the second link 153 are bent and stretched, and the toggle support 130 is moved up and down with respect to the lower platen 120.

In addition, a configuration of the toggle mechanism 150 is not limited to the configuration shown in Figs. 1 and 2. For example, the number of nodes in each link group is five in Figs. 1 and 2, but may be four. One end portion of the third link 154 may be coupled to a node between the first link 152 and the second link 153.

The mold clamping motor 160 operates the toggle mechanism 150. The mold clamping motor 160 causes the crosshead 151 to move up and down relatively with respect to the toggle support 130 to cause the first link 152 and the second link 153 to bend and stretch and the upper platen 110 to move up and down. The mold clamping motor 160 is connected to the motion conversion mechanism 170 through a belt, a pulley, or the like, but may be directly connected to the motion conversion mechanism 170.

Themotionconversionmechanism170convertsarotarymotion of the mold clamping motor 160 into a linear motion of the crosshead 151. The motion conversion mechanism 170 includes a screw shaft and a screw nut which is screwed onto the screw shaft. A ball or a roller may be interposed between the screw shaft and the screw nut.

The mold clamping motor 160 is attached to the toggle support 130, the screw shaft is rotatably supported by the toggle support 130, and the screw nut is fixed to the crosshead 151. When the mold clamping motor 160 is driven to rotate the screw shaft, the screw nut and the crosshead 151 are moved up and down relatively with respect to the toggle support 130. Accordingly, the first link 152 and the second link 153 are bent and stretched, and the toggle support 130 is moved up and down.

The mold clamping motor 160 according to the embodiment is attached to the toggle support 130, but may be attached to the frame 900. In the case, an upper end portion of the screw shaft may be rotatably supported by the crosshead 151, a lower end portion of the screw shaft may be spline-coupled to a rotary member that is rotatably held by the frame 900, and the screw nut may be fixed to the toggle support 130. When the mold clamping motor 160 is driven to rotate the rotary member, the screw shaft moves up and down while rotating, and the crosshead 151 is moved up and down relatively with respect to the toggle support 130. Accordingly, the first link 152 and the second link 153 are bent and stretched, and the toggle support 130 is moved up and down.

The mold clamping unit 100 performs a mold closing step, a pressurizing step, a mold clamping step, a depressurizing step, a mold opening step, a mold rotation step, and the like under the control of the controller 700. The mold rotation step is performed, for example, after the mold opening step is completed and before the next mold closing step is started.

In the mold closing step, the mold clamping motor 160 is driven to cause the crosshead 151 to move up relatively with respect to the toggle support 130 at a set movement speed to a mold closing completion position to cause the upper platen 110 to move down and the upper mold 810 to touch the lower mold 820. Aposition or movement speed of the crosshead 151 is detected using, for example, a mold clamping motor encoder 161. The mold clamping motor encoder 161 detects a rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. Moreover, a stationary platen position detector which detects a position of a stationary platen (the upper platen 110 in the embodiment) and a stationary platen movement speed detector which detects a movement speed of the stationary platen are not limited to the mold clamping motor encoder 161 and may be a general detector.

In the pressurizing step, the mold clamping motor 160 is further driven to cause the crosshead 151 to move up further relatively with respect to the toggle support 130 from the mold closing completion position to a mold clamping position to cause the upper platen 110 to move down and generate the mold clamping force.

In the mold clamping step, the mold clamping motor 160 is driven to keep the position of the crosshead 151 at the mold clamping position. In the mold clamping step, the mold clamping force generated in the pressurizing step is kept. In the mold clamping step, a cavity space 801 (refer to Fig. 2) is formed between the upper mold 810 and the lower mold 820, and the injection unit 300 fills the cavity space 801 with a liquid molding material. A filled molding material is solidified, and thus amoldingproduct can be obtained.

The number of cavity spaces 801 may be one or more. In the latter case, a plurality of molding products can be obtained simultaneously. The insert member is disposed in a part of the cavity space 801 and the other part of the cavity space 801 is filled with the molding material. A molding product in which the insert member and the molding material are integrated is obtained.

In the depressurizing step, the mold clamping motor 160 is driven to cause the crosshead 151 to move down relatively with respect to the toggle support 130 from the mold clamping position to a mold opening start position to cause the upper platen 110 to move up and reduce the mold clamping force. The mold opening start position may be the same as the mold closing completion position.

In the mold opening step, the mold clamping motor 160 is driven to cause the crosshead 151 to move down further relatively from the mold opening start position to the mold opening completion position at the set movement speed to cause the upper platen 110 to move up and separate the upper mold 810 from the lower mold 820.

After the completion of the mold opening step, the mold rotation step is performed before the start of the next mold closing step. In the mold rotation step, the rotary table 121 is rotated, and the molding product is rotated together with the lower mold 820. After the mold rotation step, the ejector unit 200 ejects the molding product from the lower mold 820 positioned at the molding product take-out position.

Setting conditions in the mold closing step, the pressurizing step, and the mold clamping step are collectively set as a series of setting conditions. For example, movement speeds or positions (including mold closing start position, movement speed switching position, mold closing completion position, and mold clamping position) of the crosshead 151 and the mold clamping force in the mold closing step and the pressurizing step are collectively set as a series of setting conditions. The mold closing start position, the movement speed switching position, the mold closing completion position, and the mold clamping position are disposed in this order from the lower side toward the upper side and represent a start point and an end point of a section where the movement speed is set. The movement speed is set for each section. The movement speed switching position may be one or more. The movement speed switching position may not be set. Only one of the mold clamping position and the mold clamping force may be set.

Setting conditions are similarly set in the depressurizing step and the mold opening step. For example, movement speeds or positions (including mold opening start position, movement speed switching position, and mold opening completion position) of the crosshead 151 in the depressurizing step and the mold opening step are collectively set as a series of setting conditions . The mold opening start position, the movement speed switching position, and the mold opening completion position are disposed in this order from the upper side toward the lower side and represent a start point and an end point of a section where the movement speed is set. The movement speed is set for each section. The movement speed switching position may be one or more. The movement speed switching position may not be set. The mold opening start positionmaybe the same as the mold clamping position. Moreover, the mold opening completion position may be the same as the mold closing start position.

The movement speed, the position, or the like of the stationary platen (the upper platen 110 in the embodiment) may be set instead of the movement speed, the position, or the like of the crosshead 151. Moreover, the mold clamping force may be set instead of the position (for example, the mold clamping position) of the crosshead or the position of the stationary platen.

Meanwhile, the driving force of the mold clamping motor 160 is amplified by the toggle mechanism 150 and transmitted to the upper platen 110. An amplification magnification of the toggle mechanism 150 is also referred to as a toggle magnification. The toggle magnification is changed according to an angle θ (hereinafter also referred to as "link angle θ") between the first link 152 and the second link 153. The link angle θ is obtained from the position of the crosshead 151. When the link angle θ is 180°, the toggle magnification becomes the maximum.

In a case where a space of the mold unit 800 is changed by replacement of the mold unit 800, a temperature change of the mold unit 800, or the like, a mold space adjustment is performed such that a predetermined mold clamping force is obtained when the mold is clamped. In the mold space adjustment, the gap L between the upper platen 110 and the toggle support 130 is adjusted, for example, such that the link angle θ of the toggle mechanism 150 at the time of a mold touch where the upper mold 810 touches the lower mold 820 becomes a predetermined angle.

The mold clamping unit 100 has the mold space adjustment mechanism 180. The mold space adjustment mechanism 180 adjusts the gap L between the upper platen 110 and the toggle support 130 to perform the mold space adjustment. In addition, a mold space adjustment timing is, for example, from the end of a molding cycle to the start of a next molding cycle. The mold space adjustment mechanism 180 includes, for example, a screw shaft 181 which is formed on a lower end portion of the tie bar 140, a screw nut 182 which is held by the toggle support 130 so as to be rotatable, and a mold space adjustment motor 183 which rotates the screw nut 182 screwed onto the screw shaft 181.

The screw shaft 181 and the screw nut 182 are provided for each tie bar 140. A rotation driving force of the mold space adjustment motor 183 may be transmitted to a plurality of screw nuts 182 through a rotation driving force transmission portion 185. The plurality of screw nuts 182 can be synchronously rotated with each other. In addition, it is possible to individually rotate the plurality of screw nuts 182 by changing a transmission path of the rotation driving force transmission portion 185.

The rotation driving force transmission portion 185 is configured of, for example, a gear. In the case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. The rotation driving force transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the upper platen 110 is adjusted, and the gap L between the upper platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the embodiment, the lower platen 120 is a fixed platen and the upper platen 110 is the stationary platen. However, the lower platen 120 may be the stationary platen and the upper platen 110 may be the fixed platen. In the case, the toggle mechanism 150 causes the lower platen 120 to move up and down with respect to the toggle support 130.

The mold clamping unit 100 according to the embodiment includes the mold clamping motor 160 as a drive source, but may include a hydraulic cylinder instead of the mold clamping motor 160.

Moreover, the mold clamping unit 100 according to the embodiment is the vertical type in which the mold opening and closing direction is the vertical direction, but may be a horizontal type in which the mold opening and closing direction is the horizontal direction.

### (Ejector Unit)

The ejector unit 200 ejects the molding product from the mold unit 800. For example, the ejector unit 200 ejects the molding product from the lower mold 820 positioned at the molding product take-out position. The ejector unit 200 includes an ejector rod 210 and a drive mechanism 220 which causes the ejector rod 210 to move in the Z-axis direction.

The ejector rod 210 is disposed in a through-hole of the lower platen 120 so as to be movable up and down. The ejector rod 210 passes through the through-hole of the rotary table 121 and is in contact with a movable member 830 that is disposed inside the lower mold 820 so as to be movable up and down.

The ejector rod 210 stands by below the rotary table 121 so as not to interfere with the rotary table 121 when the rotary table 121 rotates. The ejector rod 210 is not connected to the movable member 830 such that the ejector rod 210 can be retracted from the through-hole of the rotary table 121.

In a case where the lower mold 820 is attached to the lower platen 120 without using the rotary table 121, there is no possibility that the ejector rod 210 and the rotary table 121 interfere with each other. Therefore, the ejector rod 210 and the movable member 830 may be connected to each other.

The drive mechanism 220 includes, for example, an ejector motor and a motion conversion mechanism which converts a rotary motion of the ejector motor into a linear motion of the ejector rod 210. The motion conversion mechanism includes a screw shaft and a screw nut which is screwed onto the screw shaft. A ball or a roller may be interposed between the screw shaft and the screw nut.

The ejector unit 200 performs an ejection step under the control of the controller 700. In the ejection step, the ejector motor is driven to cause the ejector rod 210 to move up from a standby position to an ejection position at a set movement speed to cause the movable member 830 to move up and eject the moldingproduct. Thereafter, the ejector motor is driven to cause the ejector rod 210 to move down at a set movement speed to cause the movable member 830 to move down to an original stand by position.

The position or the movement speed of the ejector rod 210 is detected using, for example, an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

The position or the movement speed of the ejector rod 210 is detected using, for example, an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

The injection unit 300 is fixed to a slide base 302 through an injection unit attachment portion 60. The injection unit attachment portion 60 includes an attachment portion body 61 having a component fixing surface 62 to which the injection unit 300 is separably fixed and an adjustment bolt 70 that adjusts the parallelism between the component fixing surface 62 and a vertical surface. The adjustment bolt 70 connects the attachment portion body 61 and the slide base 302. The adjustment bolt 70 is an example of the parallelism adjustment portion described in the claims. The slide base 302 moves up and down along a guide 301 provided on the injection unit frame 920. The guide 301 is fixed to each of the two columns 921 as shown in Fig. 7.

The injection unit 300 moves up and down together with the slide base 302 as shown in Figs. 1 and 2. The injection unit 300 touches the mold unit 800 and fills the cavity space 801 inside the mold unit 800 with the molding material. The injection unit 300 includes, for example, a cylinder 310, a nozzle 320, the screw 330, a plasticizing motor 340, an injection motor 350, and a pressure detector 360.

The cylinder 310 heats the molding material which is supplied from a supply port 311 to the inner portion of the cylinder 310. The molding material includes, for example, a resin. The molding material is formed, for example, in a pellet shape and is supplied to the supply port 311 in a solid state. The supply port 311 is formed on an upper portion of the cylinder 310. A cooler 312 such as a water cooling cylinder is provided on an outer periphery of the upper portion of the cylinder 310. A heating unit 313 such as a band heater and a temperature detector 314 are provided on an outer periphery of the cylinder 310 in the lower side than the cooler 312.

The cylinder 310 is divided into a plurality of zones in an axial direction (for example, the Z-axis direction) of the cylinder 310. The heating unit 313 and the temperature detector 314 are provided in each of the plurality of zones. The controller 700 controls the heating unit 313 such that a set temperature is set in each of the plurality of zones and a detection temperature of the temperature detector 314 becomes the set temperature.

The nozzle 320 is provided on a lower end portion of the cylinder 310 and is pressed against the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable up and down. When the screw 330 rotates, the molding material is fed downward along spiral grooves of the screw 330. The molding material is gradually melted by heat from the cylinder 310 while being fed downward. As the liquid molding material is fed to the lower side of the screw 330 and is accumulated in a lower portion of the cylinder 310, the screw 330 is moved up. Thereafter, when the screw 330 moves down, the liquid molding material accumulated in the lower side of the screw 330 is injected from the nozzle 320 and the inside of the mold unit 800 is filled with the liquid molding material.

A back flow prevention ring 331 is attached to a lower portion of the screw 330 to be movable up and down as a backflow prevention valve which prevents a backflow of the molding material from the lower side toward the upper side of the screw 330 when the screw 330 is pressed downward.

When the screw 330 moves down, the backflow prevention ring 331 is pressed toward the upper side by the pressure of the molding material in the lower side of the screw 330 and moves up relatively with respect to the screw 330 to a close position (refer to Fig. 2) at which a flow path of the molding material is closed. Accordingly, the molding material accumulated in the lower side of the screw 330 is prevented from flowing reversely toward the upper side.

On the other hand, when the screw 330 rotates, the backflow prevention ring 331 is pressed toward the lower side by the pressure of the molding material to be fed downward along the spiral grooves of the screw 330 and moves down relatively with respect to the screw 330 to an open position (refer to Fig. 1) at which the flow path of the molding material is open. Accordingly, the molding material is fed to the lower side of the screw 330.

The backflow prevention ring 331 may be any one of a co-rotation type ring which rotates together with the screw 330 or a non-co-rotation type ring which does not rotate together with the screw 330.

The injection unit 300 may include a drive source which causes the backflow prevention ring 331 to move up and down with respect to the screw 330 between the open position and the close position.

The plasticizing motor 340 rotates the screw 330. A drive source which rotates the screw 330 is not limited to the plasticizing motor 340 and may be, for example, a hydraulic pump.

The injection motor 350 causes the screw 330 to move up and down. A motion conversion mechanism or the like which converts a rotary motion of the injection motor 350 into a linear motion of the screw 330 is provided between the injection motor 350 and the screw 330. The motion conversion mechanism includes, for example, a screw shaft and a screw nut which is screwed onto the screw shaft. A ball, a roller, or the like may be provided between the screw shaft and the screw nut. A drive source which causes the screw 330 to move up and down is not limited to the injection motor 350 and may be, for example, a hydraulic cylinder.

The pressure detector 360 detects a force to be transmitted between the injection motor 350 and the screw 330. The detected force is converted into pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing step, a filling step, a holding pressure step, or the like under the control of the controller 700. The filling step and the holding pressure step are collectively referred to as an injection step.

In the plasticizing step, the plasticizing motor 340 is driven to rotate the screw 330 at a set rotating speed, and thus the molding material is fed downward along the spiral grooves of the screw 330. According to this, the molding material is gradually melted. As the liquid molding material is fed to the lower side of the screw 330 and is accumulated in the lower portion of the cylinder 310, the screw 330 is moved up. The rotating speed of the screw 330 is detected using, for example, a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing step, in order to restrict an abrupt upward movement of the screw 330, the injection motor 350 may be driven to add a set back pressure with respect to the screw 330. The back pressure with respect to the screw 330 is detected using, for example, the pressure detector 360. The pressure detector 360 sends a signal indicating a detection result to the controller 700. When the screw 330 moves up to a plasticizing completion position and a predetermined amount of the molding material is accumulated in the lower side of the screw 330, the plasticizing step is completed.

The position and rotating speed of the screw 330 in the plasticizing step are collectively set as a series of setting conditions. For example, a plasticizing start position, a rotating speed switching position, and a plasticizing completion position are set. These positions are disposed in this order from the lower side toward the upper side and represent a start point and an end point of a section where the rotating speed is set. The rotating speed is set for each section. The rotating speed switching position may be one or more. The rotating speed switching position may not be set. Moreover, the back pressure is set for each section.

In the filling step, the injection motor 350 is driven to move the screw 330 down at a set movement speed, and thus the cavity space 801 inside the mold unit 800 is filled with the liquid molding material accumulated in the lower side of the screw 330. A position or movement speed of the screw 330 is detected using, for example, an injection motor encoder 351. The injection motor encoder 351 detects the rotation of the injection motor 350 and sends a signal indicating a detection result to the controller 700. When the position of the screw 330 reaches a set position, switching (so-called V/P switching) from the filling step to the holding pressure step is performed. A position at which the V/P switching is performed is also referred to as a V/P switching position. The set movement speed of the screw 330 may be changed according to the position of the screw 330, the time, or the like.

The position and movement speed of the screw 330 in the filling step are collectively set as a series of setting conditions . For example, a filling start position (also referred to as "injection start position"), a movement speed switching position, and a V/P switching position are set. These positions are disposed in this order from the upper side to the lower side and represent a start point and an end point of a section where the movement speed is set. The movement speed is set for each section. The movement speed switching position may be one or more. The movement speed switching position may not be set.

The upper limit value of the pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 is moved down at a set movement speed. On the other hand, in a case where the detection value of the pressure detector 360 exceeds the set pressure, the screw 330 is moved down at a movement speed slower than the set movement speed such that the detection value of the pressure detector 360 is equal to or less than the set pressure for the purpose of mold protection.

In the filling step, the screw 330 may temporarily stop at the V/P switching position after the position of the screw 330 reaches the V/P switching position, and then the V/P switching maybe performed. Immediately before the V/P switching, the screw 330 may move up and down at a very slow speed instead of the stopping of the screw 330. Moreover, a screw position detector which detects the position of the screw 330 and a screw movement speed detector which detects the movement speed of the screw 330 are not limited to the injection motor encoder 351, and a general detector can be used.

In the holding pressure step, the injection motor 350 is driven to press the screw 330 downward, and thus a pressure (hereinafter also referred to as a "holding pressure") of the molding material on a lower end portion of the screw 330 is held at a set pressure and the molding material remaining inside the cylinder 310 is pressed toward the mold unit 800. The insufficient molding materials due to the cooling shrinkage in the mold unit 800 can be replenished. The holding pressure is detected using, for example, the pressure detector 360. The pressure detector 360 sends a signal indicating a detection result to the controller 700. A set value of the holding pressure may be changed according to an elapsed time from the start of the holding pressure step or the like. A plurality of holding pressures and holding times for holding the holding pressure in the holding pressure step may be set, or the holding pressures and the holding time may be set collectively as a series of setting conditions.

In the holding pressure step, the molding material of the cavity space 801 in the mold unit 800 is gradually cooled, and an inlet of the cavity space 801 is closed by the solidified molding material when the holding pressure step is completed. This state is referred to as a gate seal, and the backflow of the molding material from the cavity space 801 is prevented. After the holding pressure step, a cooling step starts. In the cooling step, solidification of the molding material in the cavity space 801 is performed. The plasticizing step may be performed during the cooling step in order to shorten a molding cycle time.

The injection unit 300 according to the embodiment is an inline screw type, but may be a preplasticizing type or the like. A preplasticizing type injection unit supplies the molding material melted inside a plasticizing cylinder to an injection cylinder and injects the molding material from the injection cylinder into the mold unit. In the plasticizing cylinder, a screw is disposed so as to be rotatable and non-movable up and down, or a screw is disposed so as to be rotatable and movable up and down. On the other hand, a plunger is disposed in the injection cylinder so as to be movable up and down.

Moreover, the injection unit 300 according to the embodiment is the vertical type in which the axial direction of the cylinder 310 is the vertical direction, but may be the horizontal type in which the axial direction of the cylinder 310 is the horizontal direction. The mold clamping unit combined with the horizontal type injection unit 300 may be a horizontal type mold clamping unit or a vertical type mold injection unit. Similarly, the mold clamping unit combined with the vertical type injection unit 300 may be a vertical type mold clamping unit or a horizontal type mold injection unit.

### (Movement Unit)

The movement unit 400 causes the injection unit 300 to move up and down with respect to the injectionunit frame 920. Moreover, the movement unit 400 presses the nozzle 320 with respect to the mold unit 800 to generate a nozzle touch pressure. The movement unit 400 includes an injection unit moving motor 410, a motion conversion mechanism 420 that converts the rotary motion of the injection unit moving motor 410 into a linear motion (moving up-and-down motion) of the injection unit 300, and the like. The motion conversion mechanism 420 includes a screw shaft 421 and a screw nut 422 which is screwed onto the screw shaft 421. A ball or a roller may be interposed between the screw shaft 421 and the screw nut 422.

For example, the injection unit moving motor 410 is attached to the slide base 302, the screw shaft 421 is rotatably supported with respect to the slide base 302, and the screw nut 422 is fixed to the upper platen 110. When the injection unit moving motor 410 is driven to rotate the screw shaft 421, the screw shaft 421 moves up and down and the injection unit 300 moves up and down with respect to the upper platen 110.

The injection unit moving motor 410 according to the embodiment is attached to the slide base 302, but may be attached to the upper platen 110. In the case, the screw shaft 421 may be rotatably supported with respect to the upper platen 110, and the screw nut 422 may be fixed to the slide base 302. When the injection unit moving motor 410 is driven to rotate the screw shaft 421, the screw nut 422 moves up and down and the injection unit 300 moves up and down with respect to the upper platen 110.

In the embodiment, the movement unit 400 includes the injection unit moving motor 410 and the motion conversion mechanism 420. However, the invention is not limited thereto. For example, a hydraulic cylinder may be used instead of the injection unit moving motor 410 and the motion conversion mechanism 420.

### (Controller)

The controller 700 is configuredof, for example, a computer and includes a central processing unit (CPU), a storage medium such as a memory, an input interface, and an output interface. The controller 700 causes the CPU to execute a program stored in the storage medium to perform various controls. Moreover, the controller 700 receives a signal from the outside through the input interface and transmits a signal to the outside through the output interface.

The controller 700 repeats the plasticizing step, the mold closing step, the pressurizing step, the mold clamping step, the filling step, the holding pressure step, the cooling step, the depressurizing step, the mold opening step, the mold rotation step, the ejection step, and the like to repeatedly manufacture the molding product. A series of operations to obtain the molding product, for example, an operation from the start of the plasticizing step to the start of the next plasticizing step is also referred to as a "shot" or a "molding cycle". Moreover, a time required for one shot is also referred to as a "molding cycle time" or "cycle time".

For example, one molding cycle includes the plasticizing step, the mold closing step, the pressurizing step, the mold clamping step, the filling step, the holding pressure step, the cooling step, the depressurizing step, the mold opening step, the mold rotation step, and the ejection step in this order. This order herein is an order of the start of each step. The filling step, the holding pressure step, and the cooling step are performed during the mold clamping step. The start of the mold clamping step may coincide with the start of the filling step. The end of the depressurizing step coincides with the start of the mold opening step.

In addition, a plurality of steps may be simultaneously performed in order to shorten the molding cycle time. For example, the plasticizing step may be performed during the cooling step of the previous molding cycle or may be performed during the mold clamping step. In the case, the mold closing step may be performed at the beginning of the molding cycle. Moreover, the filling step may be started during the mold closing step. Moreover, the ejection step may be started during the mold closing step. In a case where an on and off valve which opens and closes the flow path of the nozzle 320 is provided, the mold opening step may be started during the plasticizing step. This is because the molding material does not leak from the nozzle 320 as long as the on and off valve closes the flow path of the nozzle 320 even when the mold opening step starts during the plasticizing step.

The one molding cycle may include a step other than the plasticizing step, the mold closing step, the pressurizing step, the mold clamping step, the filling step, the holding pressure step, the cooling step, the depressurizing step, the mold opening step, the mold rotation step, and the ejection step.

For example, a pre-plasticizing suck-back step in which the screw 330 moves up to a plasticizing start position set in advance may be performed after the completion of the holding pressure step and before the start of the plasticizing step. It is possible to reduce the pressure of the molding material accumulated in the lower side of the screw 330 before the start of the plasticizing step and thus to prevent the abrupt upward movement of the screw 330 at the start of the plasticizing step.

Moreover, a post-plasticizing suck-back step in which the screw 330 moves rearward to a filling start position (also referred to as "injection start position") set in advance may be performed after the completion of the plasticizing step and before the start of the filling step. It is possible to reduce the pressure of the molding material accumulated in the lower side of the screw 330 before the start of the filling step and thus to prevent the leakage of the molding material from the nozzle 320 before the start of the filling step.

The controller 700 is connected to an operation unit 750 or the display unit 760. The operation unit 750 receives an input operation by a user and outputs a signal in response to an input operation to the controller 700. The display unit 760 displays a display screen in response to the input operation in the operation unit 750 under the control of the controller 700.

The display screen is used for the setting of the injection molding machine 10 or the like. A plurality of display screens are prepared and displayed by switching or overlapping each other. A user operates the operation unit 750 while viewing the display screen displayed on the display unit 760 to perform the setting (including an input of a set value) of the injection molding machine 10 or the like.

The operation unit 750 and the display unit 760 may be configured of, for example, a touch panel and integrated with each other. The operation unit 750 and the display unit 760 according to the embodiment are integrated with each other, but may be provided independently. Moreover, a plurality of operation units 750 may be provided.

### (AssemblyMethodof InjectionMoldingMachine Body and Frame Mounting Portion)

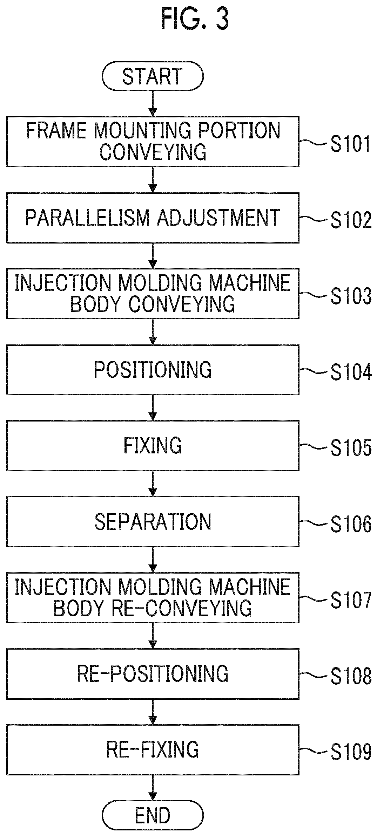

Fig. 3 is a flowchart showing an assembly method of the injection molding machine according to the embodiment. More specifically, Fig. 3 is a flowchart showing an assembly method of the injection molding machine body and the frame mounting portion according to the embodiment. As shown in Fig. 3, the assembly method of the injection molding machine body 11 and the frame mounting portion 20 includes, for example, a frame mounting portion conveying step S101, a parallelism adjustment step S102, an injection molding machine body conveying step S103, a positioning step S104, a fixing step S105, a separation step S106, an injection molding machine body re-conveying step S107, a re-positioning step S108, and re-fixing step S109. These steps S101 to S109 are performed manually in the embodiment, but may be performed automatically under the control of the controller 700. In the latter case, an assembly robot that assembles the injection molding machine body 11 and the frame mounting portion 20 is used. The assembly robot performs the steps S101 to S109 under the control of the controller 700.

In the frame mounting portion conveying step S101, the frame mounting portion 20 is conveyed. The frame mounting portion 20 is installed on the floor surface 2. The frame mounting portion 20 includes the mounting portion body 21 having the component fixing surface 22 to which the injection molding machine body 11 is separably fixed and the leveling adjuster 30 that adjusts the parallelism between the component fixing surface 22 of the mounting portion body 21 and the horizontal surface. Theleveling adjuster 30 is installed on the floor surface 2.

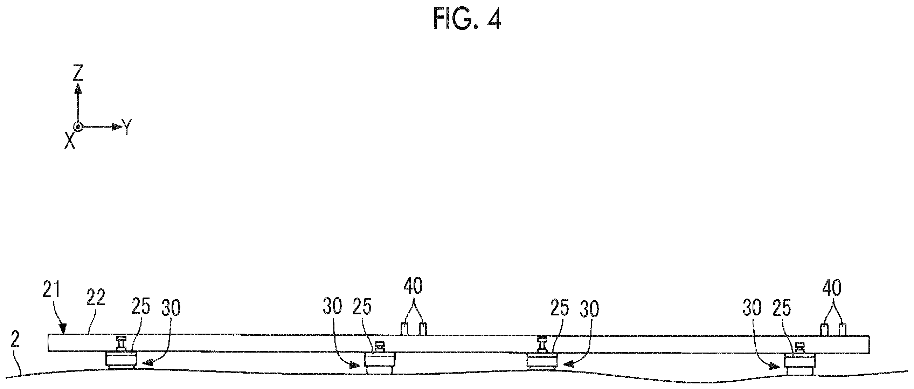

Fig. 4 is a view showing the parallelism adjustment step according to the embodiment. In the parallelism adjustment step S102, the parallelism with respect to the reference surface of the component fixing surface 22 of the mounting portion body 21 is adjusted as shown in Fig. 4. The component fixing surface 22 of the mounting portion body 21 is an upper surface of the mounting portion body 21 and is a flat surface. The reference surface is a virtual plane. The reference surface is, for example, the horizontal surface.

In the parallelism adjustment step S102, the component fixing surface 22 of the mounting portion body 21 is adjusted horizontally using a plurality of leveling adjusters 30. The frame mounting portion 20 includes the mounting portion body 21, the leveling adjuster 30, and an adjuster attachment portion 25. The leveling adjuster 30 is attached to the adjuster attachment portion 25. As shown in Fig. 4, the adjuster attachment portion 25 protrudes laterally from the mounting portion body 21, for example. A plurality of adjuster attachment portions 25 are provided at intervals along the outer periphery of the mounting portion body 21. Since the leveling adjuster 30 is disposed outside the mounting portion body 21, it is possible to easily operate the leveling adjuster 30 from the outside of the mounting portion body 21.

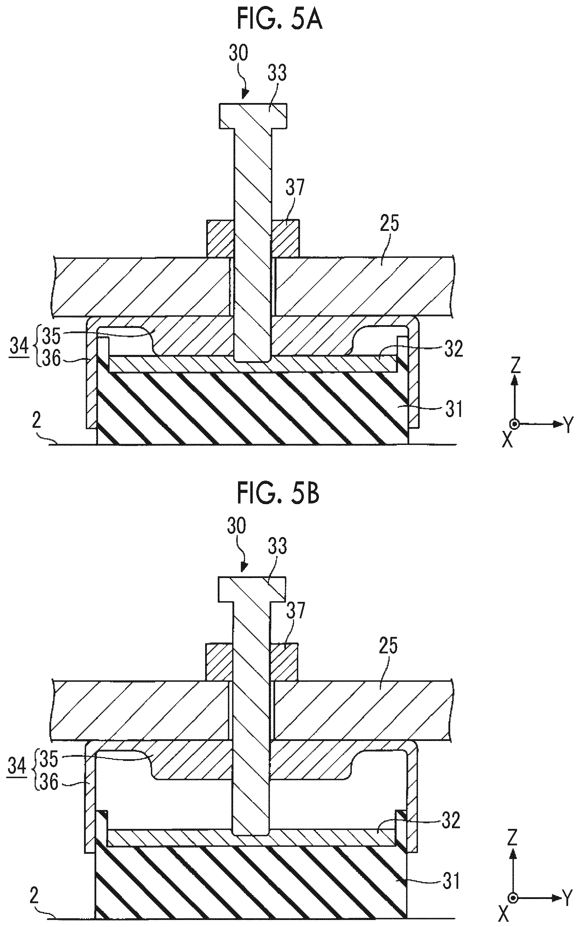

Figs. 5A and 5B are cross-sectional views showing the leveling adjuster according to the embodiment. Fig. 5A is the cross-sectional view showing a state of the leveling adjuster when a gap between the mounting portion body and the floor surface according to the embodiment is narrow. Fig. 5B is the cross-sectional view showing a state of the leveling adjuster when the gap between the mounting portion body according to the embodiment and the floor surface is wide. As shown in Figs. 5A and 5B, the leveling adjuster 30 includes a pad 31, apadprotection plate 32, an adjustment bolt 33, a moving up-and-down holder 34, and a fixing nut 37.

The pad 31 is installed on the floor surface 2. The pad 31 is made of rubber. The pad 31 absorbs vibration by elastic deformation. It is possible to suppress transmission of vibration between the injection molding machine body 11 and the floor surface 2. The pad 31 is formed, for example, in a cylindrical shape.

The pad protection plate 32 is fixed to an upper surface of the pad 31. A recessed portion is formed on the upper surface of the pad 31, and the pad protection plate 32 is installed on an inner bottom surface of the recessed portion. It is possible to prevent the pad protection plate 32 and the pad 31 from shifting in the horizontal direction. The pad protection plate 32 is made of metal or the like in a disk shape. The pad protection plate 32 prevents contact between the adjustment bolt 33 and the pad 31 to protect the pad 31.

The adjustment bolt 33 is rotatably supported on an upper surface of the pad protection plate 32. A recessed portion is formed on the upper surface of the pad protection plate 32, and a lower end portion of the adjustment bolt 33 is inserted into the recessed portion. The axial direction of the adjustment bolt 33 is the vertical direction.

The moving up-and-down holder 34 has a disk portion 35 and a cylindrical portion 36 extending downward from the outer peripheral edge of the disk portion 35. The pad 31 is disposed inside the cylindrical portion 36. It is possible to prevent the pad 31 and the moving up-and-down holder 34 from shifting in the horizontal direction.

The disk portion 35 has a screw hole into which the adjustment bolt 33 is screwed. The disk portion 35 is fixed to the mounting portion body 21. For example, the disk portion 35 is fixed to the mounting portion body 21 through the adjuster attachment portion 25. The disk portion 35 is disposed below the adjuster attachment portion 25.

The fixing nut 37 has a screw hole into which the adjustment bolt 33 is screwed. The fixing nut 37 is disposed above the adjuster attachment portion 25. The fixing nut 37 and the moving up-and-down holder 34 are disposed with the adjuster attachment portion 25 interposed therebetween.

An operator first loosens the fixing nut 37. Next, when the operator rotates the adjustment bolt 33, the moving up-and-down holder 34 moves up and down. The component fixing surface 22 of the mounting portion body 21 can be made horizontal by moving the moving up-and-down holder 34 up and down according to the inclination or unevenness of the floor surface 2. Finally, the operator tightens the fixing nut 37.

The parallelism adjustment step S102 is manually performed in the embodiment, but may be automatically performed under the control of the controller 700. In the latter case, the assembly robot performs the parallelism adjustment step S102 under the control of the controller 700.

In the injection molding machine body conveying step S103, the injection molding machine body 11 is conveyed to the component fixing surface 22 of the mounting portion body 21. The number of injection molding machine bodies 11 to be conveyed is two in the embodiment, but may be one or three or more.

The injection molding machine body 11 is assembled in advance in another place and conveyed to a molding place where the molding operation of the injection molding machine body 11 is performed. In addition, a storage place for storing the injection molding machine body 11 may be provided around the molding place. Moreover, a maintenance place for performing maintenance work on the injection molding machine body 11 may be provided around the molding place.

The injection molding machine body 11 is suspended by a crane or the like and mounted on the component fixing surface 22 of the mounting portion body 21. The mold clamping unit frame 910 is mounted on the component fixing surface 22 of the mounting portion body 21.

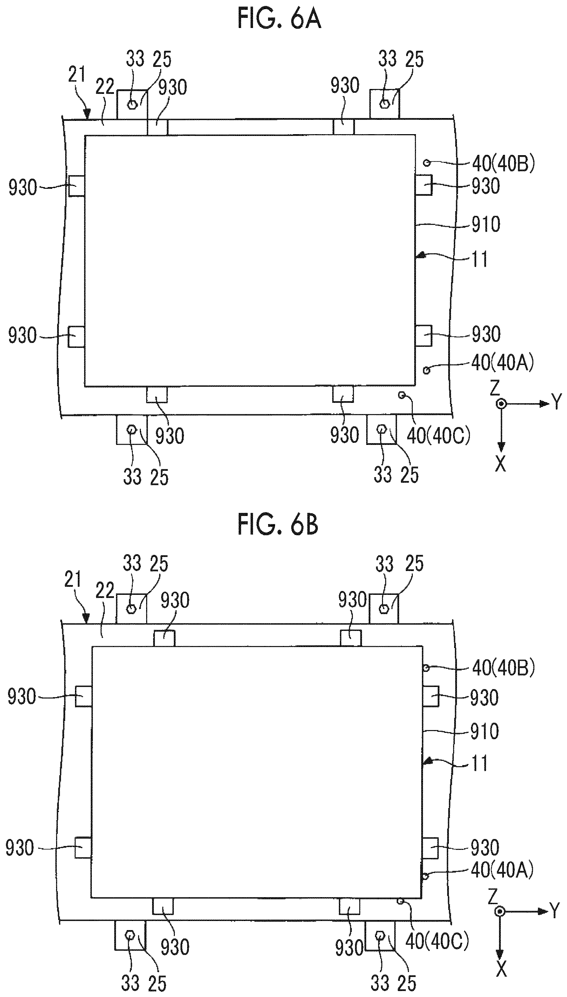

Figs. 6A and 6B are views showing the positioning step according to the embodiment. Fig. 6A is the view showing a positional relationship between the injection molding machine body and the frame mounting portion at the time of a start of the positioning step according to the embodiment. Fig. 6B is the view showing a positional relationship between the injection molding machine body and the frame mounting portion at the time of an end of the positioning step according to the embodiment. In Figs. 6A and 6B, the injection molding machine body 11 is illustrated in a simplified manner.

In the positioning step S104, the positioning portion 40 determines a position in the X-axis direction and/or a position in the Y-axis direction of the injection molding machine body 11 with respect to the component fixing surface 22 of the mounting portion body 21. The positioning portion 40 is formed on the component fixing surface 22 of the mounting portion body 21 and is formed, for example, in a projected shape on the component fixing surface 22.

The positioning portion 40 abuts an end surface in the X-axis direction of the mold clamping unit frame 910 to the positioning portion 40 to position the position in the X-axis direction of the injection molding machine body 11. Moreover, the positioning portion 40 abuts an end surface in the Y-axis direction of the mold clamping unit frame 910 to the positioning portion 40 to position the position in the Y-axis direction of the injection molding machine body 11.

The number of positioning portions 40 used for positioning one injection molding machine body 11 is not particularly limited, but is, for example, three. For example, the end surface in the Y-axis direction of the mold clamping unit frame 910 is abutted to two positioning portions 40A and 40B to determine the position in the Y-axis direction of the mold clamping unit frame 910. The end surface in the X-axis direction of the mold clamping unit frame 910 is abutted to remaining one positioning portion 40C to determine the position in the X-axis direction of the mold clamping unit frame 910.

The positioning portion 40 is formed in a cylindrical shape. The shape of the positioning portion 40 is not particularly limited. For example, the positioning portion 40 may be formed in a polygonal column shape.

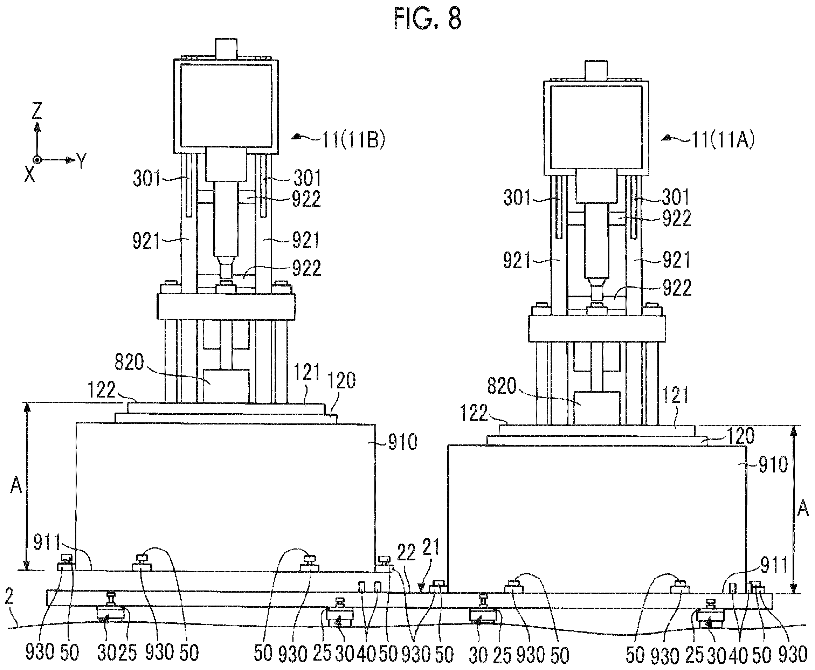

In the embodiment, the positioning portion 40 abuts against the end surface in the X-axis direction and/or the end surface in the Y-axis direction of the mold clamping unit frame 910, but may be fitted to an end surface in the Z-axis direction (more specifically, lower surface) of the mold clamping unit frame 910. The lower surface of the mold clamping unit frame 910 is a split surface 911 (refer to Fig. 8 and the like) with the mounting portion body 21 of the mold clamping unit frame 910. For example, a recessed portion is formed on the split surface 911 of the mold clamping unit frame 910, and the recessed portion is fitted to the positioning portion 40.

The positioning portion 40 is formed in a projected shape on the component fixing surface 22 in the embodiment, but may be formed in a recessed shape. In the case, a projected portion is formed on the split surface 911 of the mold clamping unit frame 910, and the projected portion is fitted to the positioning portion 40.

In the embodiment, the positioning step S104 is performed after the injection molding machine body conveying step S103, but the invention is not limited thereto. The injection molding machine body conveying step S103 and the positioning step S104 may be performed in parallel. For example, the positioning portion 40 may determine the position in the X-axis direction and/or the position in the Y-axis direction of the injection molding machine body 11 while the injection molding machine body 11 is suspended by a crane or the like.

Fig. 7 is a view showing the fixing step according to the embodiment. In the fixing step S105, the injection molding machine body 11 is separably fixed to the component fixing surface 22 of the mounting portion body 21. For example, a fixing bolt 50 is used as a fixing portion that separably fixes the injection molding machine body 11 to the component fixing surface 22. The fixing bolt 50 is tightened to fix the injection molding machine body 11 to the component fixing surface 22. Moreover, the fixing bolt 50 is loosened to be able to separate the injection molding machine body 11 from the component fixing surface 22.

The injection molding machine body 11 has a bolt attachment portion 930 to which the fixing bolt 50 is attached. The bolt attachment portion 930 protrudes from the mold clamping unit frame 910 to the outside of the mold clamping unit frame 910, for example. A lower surface of the bolt attachment portion 930 and a lower surface of the mold clamping unit frame 910 are disposed on the same plane. The bolt attachment portion 930 and the mold clamping unit frame 910 are mounted on the component fixing surface 22 of the mounting portion body 21.

For example, the fixing bolt 50 is inserted into a straight hole of the bolt attachment portion 930 and screwed into a bolt hole of the mounting portion body 21. The fixing bolt 50 is tightened to tighten the bolt attachment portion 930 to the component fixing surface 22 and fix the injection molding machine body 11 to the component fixing surface 22. Moreover, the fixing bolt 50 is loosened to be able to separate the injection molding machine body 11 from the component fixing surface 22.

Since the bolt attachment portion 930 is disposed outside the mold clamping unit frame 910, it is possible to easily operate the fixing bolt 50 from the outside of the mold clamping unit frame 910.

The bolt attachment portion 930 according to the embodiment is disposed outside the mold clamping unit frame 910, but the invention is not limited thereto. The bolt attachment portion 930 may be disposed inside the mold clamping unit frame 910. Since the bolt attachment portion 930 does not protrude outside the mold clamping unit frame 910, the bolt attachment portion 930 does not interfere with other members.

The fixing portion that separably fixes the injection molding machine body 11 to the component fixing surface 22 is not limited to the fixing bolt 50. For example, an electromagnet or the like may be used instead of the fixing bolt 50. The electromagnet is disposed, for example, in the mounting portion body 21 to attract the injection molding machine body 11. The electromagnet may be disposed in the injection molding machine body 11 to attract the mounting portion body 21. In any case, it is possible to separably fix the injection molding machine body 11 to the component fixing surface 22 by controlling current supply to the electromagnet.

A plurality of injection molding machine bodies 11A and 11B are fixed to the component fixing surface 22 of the mounting portion body 21. The plurality of injection molding machine bodies 11A and 11B have the same dimension A. The dimension A is a distance in the Z-axis direction between the split surface 911 of the mold clamping unit frame 910 and the lower mold attachment surface 122 to which the lower mold 820 is attached. The split surface 911 of the mold clamping unit frame 910 and the lower mold attachment surface 122 are parallel.

The lower mold attachment surface 122 is, for example, an upper surface of the rotary table 121. The lower mold 820 may be directly attached to the lower platen 120 without using the rotary table 121 as described above. In the case, the lower mold attachment surface 122 is an upper surface of the lower platen 120.

The plurality of injection molding machine bodies 11A and 11B are mounted on the component fixing surface 22 of the mounting portion body 21. The component fixing surface 22 of the mounting portion body 21 is already adjusted in advance horizontally. Therefore, the lower mold attachment surface 122 of one injection molding machine body 11A and the lower mold attachment surface 122 of another injection molding machine body 11B can be disposed on the same horizontal surface.

Since the lower molds 820 have the same height between the plurality of injection molding machine bodies 11A and 11B, it is not necessary to adjust the height of the lower mold 820. The reason why the heights of the lower molds 820 are set to be uniform is that a peripheral device common to the plurality of injection molding machine bodies 11A and 11B is used.

In the embodiment, the heights of the lower molds 820 are set to be uniform between the plurality of injection molding machine bodies 11A and 11B. However, the invention is not limited thereto. The leveling adjuster 30 adjusts the height of the lower mold 820 to a predetermined height. The disposition of the peripheral device may be determined according to the height of the lower mold 820, or the height of the lower mold 820 may be determined according to the disposition of the peripheral device.

An example of the peripheral device includes a take-out machine. The take-out machine takes out the molding product from the lower mold 820. An example of the peripheral device also includes an insert machine in addition to the take-out machine. The insert machine sets the insert member in the lower mold 820. The take-out machine may have a function of the insert machine.

Fig. 8 is a view showing the separation step according to the embodiment. In the separation step S106, the injection molding machine body 11B fixed in the fixing step S105 is separated from the component fixing surface 22 of the mounting portion body 21. The separation step S106 is performed after the fixing step S105. The separation step S106 is performed at the time of failure of injection molding machine body 11B fixed in the fixing step S105, for example. The failed injection molding machine body 11B is conveyed from the molding place to the maintenance place and maintained at the maintenance place. Thereafter, the maintained injection molding machine body 11B is conveyed from the maintenance place to the storage place and stored in the storage place. The maintenance place may also serve as the storage place.

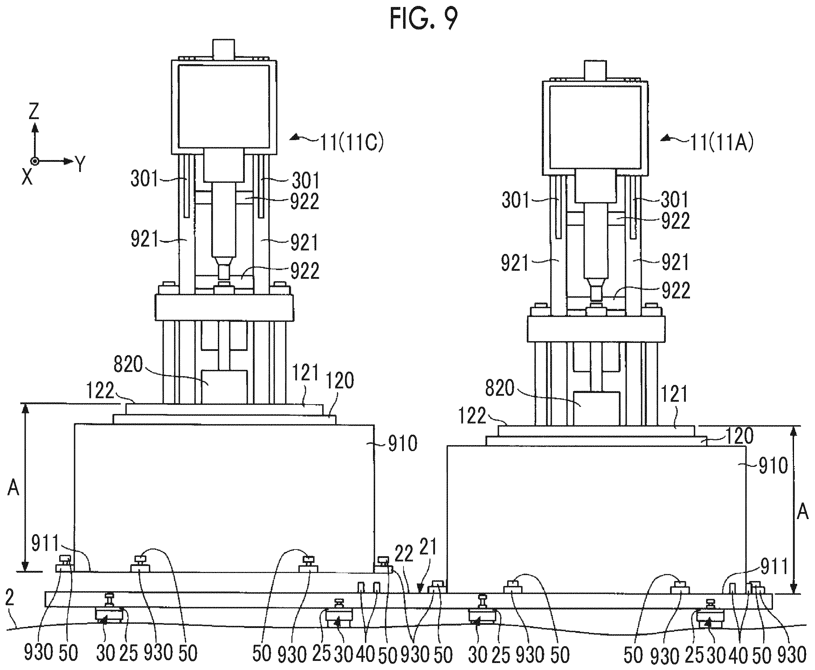

Fig. 9 is a view showing a state in the middle of the re-conveying step according to the embodiment. In the injection molding machine body re-conveying step S107, the injection molding machine body 11C is conveyed to the component fixing surface 22 of the mounting portion body 21. The injection molding machine body 11C is assembled in advance in another place, stored in the storage place and is conveyed from the storage place to the molding place.

The injection molding machine body 11C is suspended by a crane or the like and mounted on the component fixing surface 22 of the mounting portion body 21. The mold clamping unit frame 910 is mounted on the component fixing surface 22 of the mounting portion body 21.

In the re-positioning step S108, the positioning portion 40 determines a position in the X-axis direction and/or a position in the Y-axis direction of the injection molding machine body 11C with respect to the component fixing surface 22 of the mounting portion body 21. The re-positioning step S108 is performed in the same manner as the positioning step S104 shown in Figs. 6A and 6B.

In the embodiment, the re-positioning step S108 is performed after the injection molding machine body re-conveying step S107. However, the invention is not limited thereto. The injection molding machine body re-conveying step S107 and the re-positioning step S108 may be performed in parallel. For example, the positioning portion 40 may determine the position in the X-axis direction and/or the position in the Y-axis direction of the injection molding machine body 11C while the injection molding machine body 11C is suspended by a crane or the like.

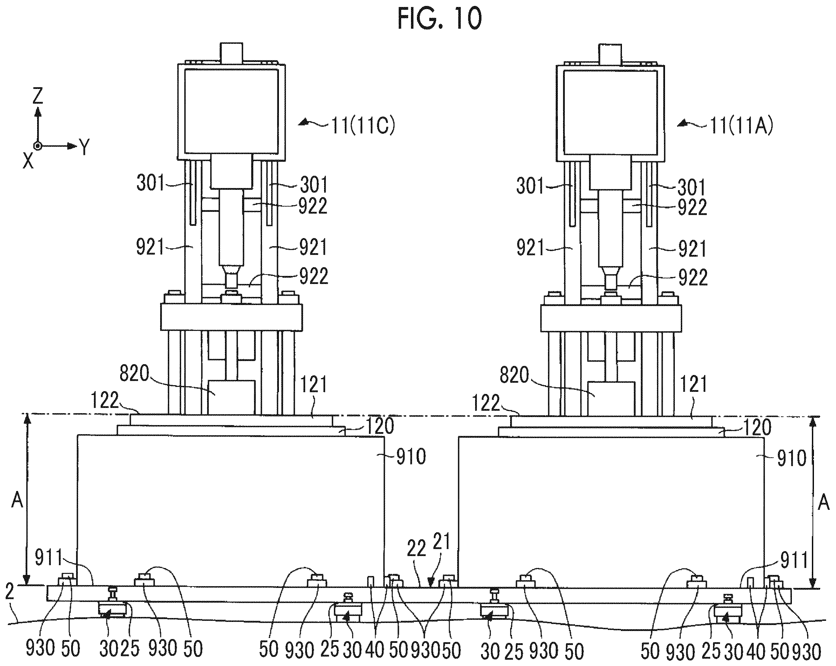

Fig. 10 is a view showing the re-fixing step according to the embodiment. In the re-fixing step S109, the injection molding machine body 11C is separably fixed to the component fixing surface 22 of the mounting portion body 21. The injection molding machine body 11C fixed in the re-fixing step S109 and the injection molding machine body 11B separated in the separation step S106 have the same dimension A. The dimension A is the distance in the Z-axis direction between the split surface 911 of the mold clamping unit frame 910 and the lower mold attachment surface 122 to which the lower mold 820 is attached, as described above. The split surface 911 of the mold clamping unit frame 910 and the lower mold attachment surface 122 are parallel.

As described above, the assembly method according to the embodiment includes the parallelism adjustment step S102 and the fixing step S105. In the parallelism adjustment step S102, the component fixing surface 22 of the mounting portion body 21 is adjusted horizontally. In the fixing step S105, the injection molding machine body 11 is separably fixed to the component fixing surface 22 of the mounting portion body 21.

The injection molding machine body 11 in the related art is integrated with the adjuster attachment portion 25 by welding or the like and cannot be separated from the adjuster attachment portion25. Therefore, the leveling adjuster 30 is moved together with the injection molding machine body 11 in order to move the injection molding machine body 11 from the molding place to the maintenance place, for example.

When the maintained injection molding machine body 11 is returned to an original molding place, it is difficult to visually return the leveling adjuster 30 to the same exact position as an original installation position. After the adjuster attachment portion 25 is visually returned to the same position as the original installation position, work for returning the lower mold attachment surface 122 of the injection molding machine body 11 to the horizontal is performed.

Moreover, the same applies to a case where another injection molding machine body 11 is installed at the molding place during maintenance of the injection molding machine body 11. This is because it is difficult to visually set the installation position of the leveling adjuster 30 after replacement to the same exact position as the installation position of the leveling adjuster 30 before replacement.

The injection molding machine body 11 according to the embodiment is separably fixed to the component fixing surface 22 of the mounting portion body 21. The component fixing surface 22 of the mounting portion body 21 is kept horizontal from the separation step S106 to the re-fixing step S109. It is possible to set the lower mold attachment surface 122 of the injection molding machine body 11 horizontally simply by mounting the injection molding machine body 11 on the horizontal component fixing surface 22. Therefore, it is possible to reduce a frequency of the work for adjusting the lower mold attachment surface 122 horizontally.

The injection molding machine body 11C fixed in the re-fixing step S109 and the injection molding machine body 11B separated in the separation step S106 are different. It is possible to perform the molding operation of the injection molding machine body 11C at the molding place while the injection molding machine body 11B is maintained at the maintenance place. Since the molding operation of another injection molding machine body 11C is performed during the maintenance of the injection molding machine body 11B, it is possible to prevent a decrease in a production speed of the molding product.

The injection molding machine body 11C fixed in the re-fixing step S109 and the injection molding machine body 11B separated in the separation step S106 have the same dimension A. It is possible to dispose the lower mold attachment surface 122 of the injection molding machine body 11C after replacement on the same horizontal surface as the lower mold attachment surface 122 of the injection molding machine body 11B before replacement. It is possible to keep a positional relationship in the vertical direction between the lower mold 820 and the peripheral device before and after the replacement of the injection molding machine body 11. Since the labor of alignment in the vertical direction between the lower mold 820 and the peripheral device can be saved, it is possible to reduce the labor of preparation from the replacement of the injection molding machine body 11 to the restart of the molding operation.

The injection molding machine body 11C fixed in the re-fixing step S109 and the injection molding machine body 11A fixed in the fixing step S105 have the same dimension A. It is possible to set the heights of the lower molds 820 to be uniform between the plurality of injection molding machine bodies 11C and 11A disposed side by side. The reason why the heights of the lower molds 820 are set to be uniform is that a peripheral device common to the plurality of injection molding machine bodies 11C and 11A is used.

In the embodiment, the plurality of injection molding machine bodies 11A, 11B, and 11C have the same dimension A. However, the invention is not limited thereto. For example, in a case where the peripheral device is disposed for each injection molding machine body 11, all the injection molding machine bodies 11A, 11B, and 11C may not have the same dimension A as long as the injection molding machine body 11B before replacement and the injection molding machine body 11C after replacement have the same dimension A.

The assembly method according to the embodiment includes the positioning step S104 and the re-positioning step S108. The same positioning portion 40 is used in both the positioning step S104 and the re-positioning step S108. Therefore, the position in the X-axis direction of the injection molding machine body 11B positioned in the positioning step S104 and the position in the X-axis direction of the injection molding machine body 11C positioned in the re-positioning step S108 can be set to be uniform. Moreover, the position in the Y-axis direction of the injection molding machine body 11B positioned in the positioning step S104 and the position in the Y-axis direction of the injection molding machine body 11C positioned in the re-positioning step S108 can be set to be uniform. It is possible to keep a positional relationship in the horizontal direction between the lower mold 820 and the peripheral device before and after the replacement of the injection molding machine body 11. It is possible to reduce the labor of a setting change of the peripheral device and to reduce the labor of preparation from the replacement of the injection molding machine body 11 to the restart of the molding operation.

In the embodiment, the injection molding machine body 11C fixed in the re-fixing step S109 and the injection molding machine body 11B separated in the separation step S106 are different. However, the invention is not limited thereto. In a case where there is no substitute for the injection molding machine body 11B separated in the separation step S106 in the storage place, the re-fixing step S109 is performed after the maintenance of the injection molding machine body 11B separated in the separation step S106 ends. In the re-fixing step S109, the maintained injection molding machine body 11B is separably fixed again to the component fixing surface 22 of the mounting portion body 21.

Next, a case where the injection molding machine body 11B separated in the separation step S106 is fixed in the re-fixing step S109 will be described. In the case, the injection molding machine body 11B separated in the separation step S106 and the injection molding machine body 11B fixed in the re-fixing step S109 are the same. Needless to say, the same injection molding machine body 11B has the same dimension A. Therefore, it is possible to keep a positional relationship in the vertical direction between the lower mold 820 and the peripheral device before and after the maintenance. It is possible to reduce the labor of the setting change of the peripheral device and to reduce the labor of preparation until the molding operation is restarted. Moreover, the positioning portion 40 can keep the positional relationship in the horizontal direction between the lower mold 820 the peripheral device before and after the maintenance. It is possible to reduce the labor of the setting change of the peripheral device and to reduce the labor of preparation until the molding operation is restarted.

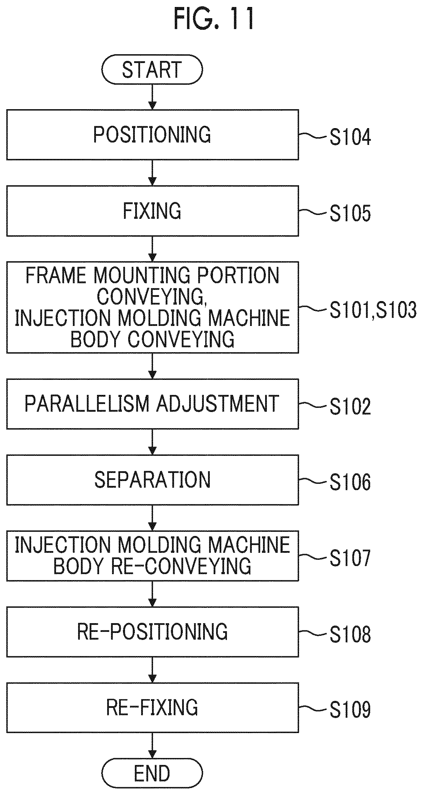

Fig. 11 is a flowchart showing a modification example of the assembly method shown in Fig. 3. The fixing step S105 is performed after the parallelism adjustment step S102 in the assembly method as shown in Fig. 3 according to the above embodiment, whereas the parallelism adjustment step S102 is performed after the fixing step S105 in the assembly method as shown in Fig. 11 according to the modification example.

As shown in Fig. 11, first, the positioning step S104 and the fixing step S105 are performed in this order, and then the frame mounting portion conveying step S101 and the injection molding machine body conveying step S103 are performed simultaneously. Since the injection molding machine body 11 is separably fixed to the frame mounting portion 20 before these steps S101 and S103, the injection molding machine body 11 and the frame mounting portion 20 are collectively conveyed to the molding place.

Subsequently, the parallelism adjustment step S102 is performed as shown in Fig. 11. In the parallelism adjustment step S102, the component fixing surface 22 of the mounting portion body 21 is adjusted horizontally using the plurality of leveling adjusters 30. In the parallelism adjustment step S102, the lower mold attachment surface 122 maybe adjusted horizontally to adjust the component fixing surface 22 of the mounting portion body 21 horizontally. Moreover, in the parallelism adjustment step S102, the height of the lower mold attachment surface 122 is adjusted to a height set in advance.

Thereafter, as shown in Fig. 11, the separation step S106, the injection molding machine body re-conveying step S107, the re-positioning step S108, and the re-fixing step S109 are performed. Since the order of these steps S106 to S109 is the same as the order of the steps S106 to S109 shown in Fig. 3, a description thereof is omitted.

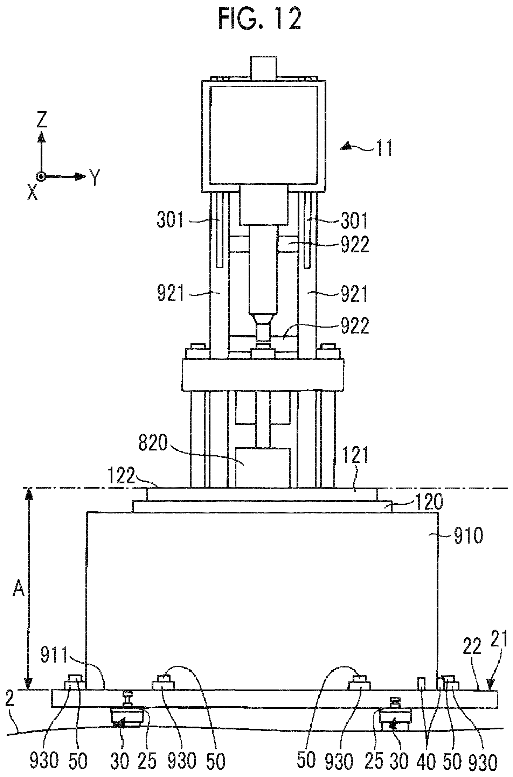

Fig. 12 is a view showing a modification example of the frame mounting portion shown in Fig. 7. The frame mounting portion 20 according to the above embodiment has a plurality of regions where the injection molding machine body 11 is separably fixed as shown in Fig. 7, whereas the frame mounting portion 20 according to the modification example has one region where the injection molding machine body 11 is separably fixed as shown in Fig. 12. Similarly to the above embodiment, also in the modification example, the assembly of the injection molding machine body 11 and the frame mounting portion 20 may be performed in the order shown in Fig. 11 or in the order shown in Fig. 3.

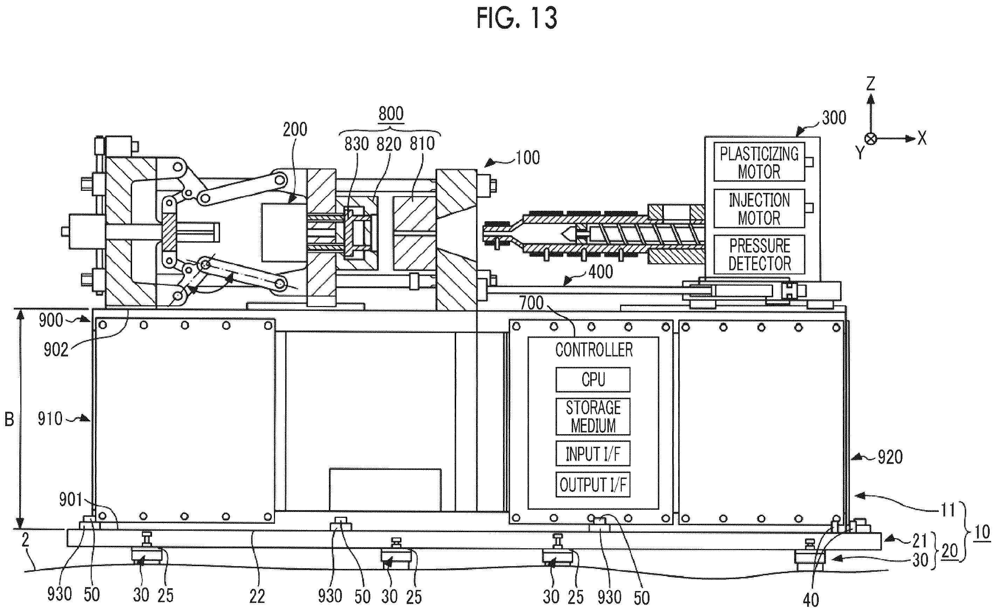

Fig. 13 is a view showing an example of a horizontal injection molding machine body and a frame mounting portion. The vertical injection molding machine body 11 is separably fixed to the frame mounting portion 20 as shown in Fig. 7 according to the above embodiment, whereas the horizontal injection molding machine body 11 is separably fixed to the frame mounting portion 20 as shown in Fig. 13 according to the modification example.

The horizontal injection molding machine body 11 includes a horizontal mold clamping unit 100 and a horizontal type injection unit 300. In a case where the mold clamping unit 100 is the horizontal type, the X-axis direction is the mold opening and closing direction, the Y-axis direction is the width direction of the injection molding machine 10, and the Z-axis direction is the vertical direction. In a case where the injection unit 300 is the horizontal type, the movement unit 400 causes the injection unit 300 to move in the X-axis direction.

The horizontal injection molding machine body 11 has the frame 900. The frame 900 includes the mold clamping unit frame 910 and the injection unit frame 920. The controller 700 is disposed inside the injection unit frame 920. The mold clamping unit frame 910 and the injection unit frame 920 are mounted on the component fixing surface 22 of the mounting portion body 21. A lower surface of the frame 900 is a split surface 901 with the mounting portion body 21 of the frame 900.

The horizontal injection molding machine body 11 is separably fixed to the component fixing surface 22 of the mounting portion body 21. The leveling adjuster 30 adjusts the parallelism of the component fixing surface 22 of the mounting portion body 21 with respect to the reference surface. The component fixing surface 22 of the mounting portion body 21 is an upper surface of the mounting portion body 21 and is a flat surface. The reference surface is a virtual plane. The reference surface is, for example, the horizontal surface. The leveling adjuster 30 adjusts the component fixing surface 22 of the mounting portion body 21 horizontally.

The split surface 901 of the frame 900 and the upper surface 902 of the frame 900 are parallel. Since the component fixing surface 22 of the mounting portion body 21 is adjusted horizontally, it is possible to set the upper surface 902 of the frame 900 horizontally simply by mounting the frame 900 on the component fixing surface 22.
Moreover, when a dimension B between the split surface 901 of the frame 900 and the upper surface 902 of the frame 900 is already adjusted in advance, it is possible to set a height of the upper surface 902 of the frame 900 to a predetermined height simply by mounting the frame 900 on the component fixing surface 22.

The frame mounting portion 20 shown in Fig. 13 has one region where the horizontal injection molding machine body 11 is separably fixed. However, the invention is not limited thereto. The frame mounting portion 20 may have a plurality of regions where the horizontal injection molding machine body 11 is separably fixed.

### (Assembly Method of Injection Unit and Injection Unit Attachment Portion)

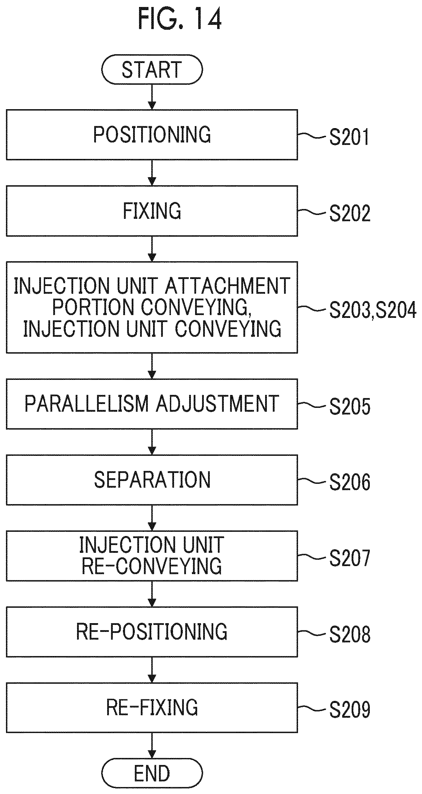

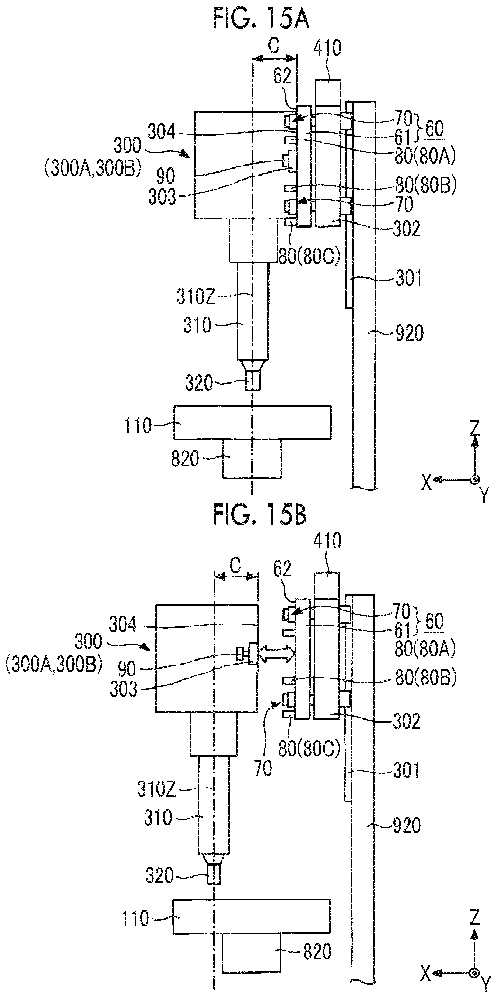

Fig. 14 is a flowchart showing an assembly method of the injection unit and the injection unit attachment portion according to the embodiment. Figs. 15A and 15B are views showing a fixed state and a separated state of the injection unit according to the embodiment. Fig. 15A is the view showing the fixed state of the injection unit according to the embodiment. Fig. 15B is the view showing the separated state of the injection unit according to the embodiment. The injection unit 300 is fixed to the slide base 302 through the injection unit attachment portion 60. The injection unit attachment portion 60 includes the attachment portion body 61 having the component fixing surface 62 to which the injection unit 300 is separably fixed and the adjustment bolt 70 that adjusts the parallelism between the component fixing surface 62 and the vertical surface. The adjustment bolt 70 connects the attachment portion body 61 and the slide base 302.

As shown in Fig. 14, the assembly method of the injection unit 300 and the injection unit attachment portion 60 includes, for example, a positioning step S201, a fixing step S202, an injection unit attachment portion conveying step S203, an injection unit conveying step S204, a parallelism adjustment step S205, a separation step S206, an injection unit re-conveying step S207, a re-positioning step S208, and a re-fixing step S209. These steps S201 to S209 are performed manually in the embodiment, but may be performed automatically under the control of the controller 700. In the latter case, an assembly robot that assembles the injection unit 300 and the injection unit attachment portion 60 is used. The assembly robot performs the steps S201 to S209 under the control of the controller 700.

In the positioning step S201, a positioning portion 80 determines a position in the Y-axis direction and/or a position in the Z-axis direction of the injection unit 300 with respect to the component fixing surface 62 of the attachment portion body 61. The positioning portion 80 is formed on the component fixing surface 62 of the attachment portion body 61 and is formed, for example, in a projected shape on the component fixing surface 62.

The positioning portion 80 abuts an end surface in the Y-axis direction of the injection unit 300 to the positioning portion 80 to position the position in the Y-axis direction of the injection unit 300. The position in the Y-axis direction of the injection unit 300 is determined such that a position in the Y-axis direction of the nozzle 320 matches a position in the Y-axis direction of an injection port of the mold unit 800. Moreover, the positioning portion 80 abuts an end surface in the Z-axis direction of the injection unit 300 to the positioning portion 80 to position the position in the Z-axis direction of the injection unit 300.

The number of positioning portions 80 used for positioning one injection unit 300 is not particularly limited and is three, for example. For example, the end surface in the Y-axis direction of the injection unit 300 is abutted to two positioning portions 80A and 80B to determine the position in the Y-axis direction of the injection unit 300. The end surface in the Z-axis direction of the injection unit 300 is abutted to remaining one positioning portion 80C to determine the position in the Z-axis direction of the injection unit 300.

The positioning portion 80 is formed in a cylindrical shape. The shape of the positioning portion 80 is not particularly limited. For example, the positioning portion 80 may be formed in a polygonal column shape.

In the embodiment, the positioning portion 80 abuts against the end surface in the Y-axis direction and/or the end surface in the Z-axis direction of the injection unit 300, but may be fitted to the end surface in the X-axis direction of the injection unit 300. The end surface in the X-axis direction of the injection unit 300 is a split surface 304 with the attachment portion body 61 of the injection unit 300. For example, a recessed portion is formed on the split surface 304 of the injection unit 300, and the recessed portion is fitted to the positioning portion 80.

The positioning portion 80 is formed in a projected shape on the component fixing surface 62 in the embodiment, but may be formed in a recessed shape. In the case, a projected portion is formed on the split surface 304 of the injection unit 300, and the projected portion is fitted to the positioning portion 80.

In the fixing step S202, the injection unit 300 is separably fixed to the component fixing surface 62 of the attachment portion body 61. For example, a fixing bolt 90 is used as a fixing portion that separably fixes the injection unit 300 to the component fixing surface 62. The fixing bolt 90 is tightened to fix the injection unit 300 to the component fixing surface 62. Moreover, the fixing bolt 90 is loosened to be able to separate the injection unit 300 from the component fixing surface 62.

The injection unit 300 has a bolt attachment portion 303 to which the fixing bolt 90 is attached. The bolt attachment portion 303 protrudes from the injection unit 300 to the outside of the injection unit 300, for example. The bolt attachment portion 303 and the injection unit 300 are abutted to the component fixing surface 62 of the attachment portion body 61.

For example, the fixing bolt 90 is inserted into a straight hole of the bolt attachment portion 303 and screwed into a bolt hole of the attachment portion body 61. The fixing bolt 90 is tightened to tighten the bolt attachment portion 303 to the component fixing surface 62 and fix the injection unit 300 to the component fixing surface 62. Moreover, the fixing bolt 90 is loosened to be able to separate the injection unit 300 from the component fixing surface 62.

Since the bolt attachment portion 303 is disposed outside the injection unit 300, it is possible to easily operate the fixing bolt 90 from the outside of the injection unit 300.

The bolt attachment portion 303 according to the embodiment is disposed outside the injection unit 300. However, the invention is not limited thereto. The bolt attachment portion 303 may be disposed inside the injection unit 300. Since the bolt attachment portion 303 does not protrude outside the injection unit 300, the bolt attachment portion 303 does not interfere with other members.

The fixing portion that separably fixes the injection unit 300 to the component fixing surface 62 is not limited to the fixing bolt 90. For example, an electromagnet or the like may be used instead of the fixing bolt 90. The electromagnet is disposed, for example, on the attachment portion body 61 and attracts the injection unit 300. The electromagnet may be disposed in the injection unit 300 and attract the attachment portion body 61. In any case, it is possible to separably fix the injection unit 300 to the component fixing surface 62 by controlling current supply to the electromagnet.

In the injection unit attachment portion conveying step S203, the injection unit attachment portion 60 is conveyed. Moreover, in the injection unit conveying step S204, the injection unit 300 is conveyed. In the embodiment, the injection unit 300 is separably fixed to the injection unit attachment portion 60 before these steps S203 and S204. Therefore, the injection unit attachment portion 60 and the injection unit 300 are collectively conveyed to the molding place. The injection unit attachment portion 60 and the injection unit 300 may be conveyed to the molding place as a part of the injection molding machine body 11, for example, may be conveyed to the molding place in the injection molding machine body conveying step S103 shown in Fig. 3 or the injection molding machine body conveying step S103 shown in Fig. 11.

In the parallelism adjustment step S205, the parallelism with respect to the reference surface of the component fixing surface 62 of the attachment portion body 61 is adjusted using a plurality of adjustment bolts 70. The component fixing surface 62 of the attachment portion body 61 is a surface to which the injection unit 300 is separably fixed. The component fixing surface 62 of the attachment portion body 61 is, for example, a lateral side surface (more specifically, the end surface in the X-axis direction) of the attachment portion body 61. The lateral side surface is a flat surface. The reference surface is a virtual plane. The reference surface is, for example, a vertical surface.

Moreover, in the parallelism adjustment step S205, the position in the X-axis direction of the component fixing surface 62 of the attachment portion body 61 is adjusted. The position in the X-axis direction of the component fixing surface 62 is adjusted such that a position in the X-axis direction of the injection port of the mold unit 800 matches a position in the X-axis direction of the nozzle 320. This is because the nozzle 320 injects the molding material inside the mold unit 800 from the injection port of the mold unit 800. The injection port of the mold unit 800 is formed on an upper surface of the upper mold 810, for example.

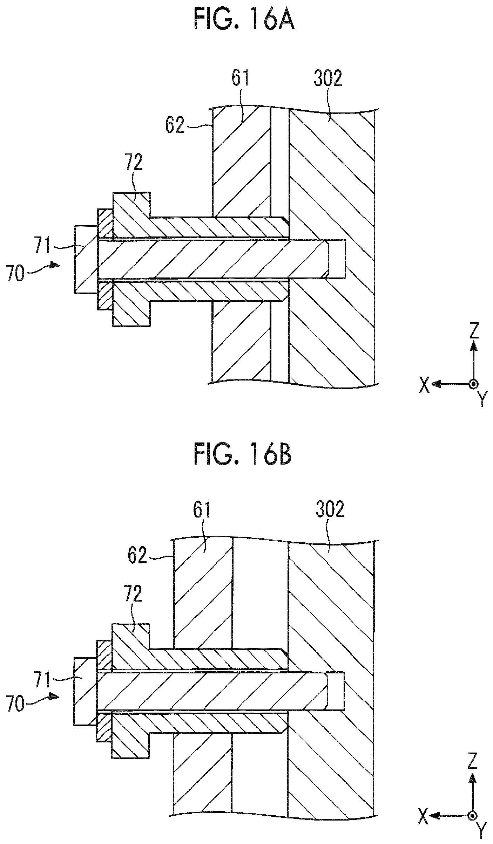

Figs. 16A and 16B are cross-sectional views showing the adjustment bolt according to the embodiment. Fig. 16A is the cross-sectional view showing a state of the adjustment bolt when a gap between the attachment portion body and the slide base according to the embodiment is narrow. Fig. 16B is the cross-sectional view showing a state of the adjustment bolt when the gap between the attachment portion body and the slide base according to the embodiment is wide. As shown in Figs. 16A and 16B, the adjustment bolt 70 includes a fixing bolt 71 and a rotary bolt 72.

The fixing bolt 71 and the rotary bolt 72 are disposed coaxially. An axial direction of the fixing bolt 71 and an axial direction of the rotary bolt 72 are the horizontal direction (for example, the X-axis direction). The fixing bolt 71 is inserted into a straight hole of the rotary bolt 72 and screwed into a bolt hole of the slide base 302. The rotary bolt 72 is rotatably sandwiched between a head portion of the fixing bolt 71 and the slide base 302. The rotary bolt 72 is screwed into the bolt hole of the attachment portion body 61.

When the operator rotates the rotary bolt 72, the attachment portion body 61 moves in the axial direction of the rotary bolt 72. It is possible to adjust a distance in the X-axis direction between the attachment portion body 61 and the slide base 302 and set the component fixing surface 62 of the attachment portion body 61 to be vertical. The parallelism adjustment step S205 is manually performed in the embodiment, but may be automatically performed under the control of the controller 700. In the latter case, the assembly robot performs the parallelism adjustment step S205 under the control of the controller 700.

In the separation step S206, the injection unit 300 fixed in the fixing step S202 is separated from the component fixing surface 62 of the attachment portion body 61. The separation step S206 is performed after the fixing step S202. The separation step S206 is performed, for example, when the injection unit 300 fixed in the fixing step S202 fails. The failed injection unit 300 is conveyed from the molding place to the maintenance place and maintained at the maintenance place. Thereafter, the maintained injection unit 300 is conveyed from the maintenance place to the storage place and stored in the storage place. The maintenance place may also serve as the storage place.

In the injection unit re-conveying step S207, the injection unit 300 is conveyed to the component fixing surface 62 of the attachment portion body 61. The injection unit 300 is assembled in advance in another place and stored in the storage place and is conveyed from the storage place to the molding place.

In the re-positioning step S208, the positioning portion 80 determines the position in the Y-axis direction and/or the position in the Z-axis direction of the injection unit 300 with respect to the component fixing surface 62 of the attachment portion body 61. The positioning portion 80 is formed on the component fixing surface 62 of the attachment portion body 61 and is formed, for example, in a projected shape on the component fixing surface 62.

In the embodiment, the re-positioning step S208 is performed after the injection unit re-conveying step S207. However, the invention is not limited thereto. The injection unit re-conveying step S207 and the re-positioning step S208 may be performed in parallel. For example, the positioning portion 80 may determine the position in the Y-axis direction and/or the position in the Z-axis direction of the injection unit 300 while the injection unit 300 is suspended by a crane or the like.

In the re-fixing step S209, the injection unit 300 is separably fixed to the component fixing surface 62 of the attachment portion body 61. An injection unit 300B fixed in the re-fixing step S209 and an injection unit 300A separated in the separation step S206 have the same dimension C. The dimension C is a distance in the X-axis direction between the split surface 304 of the injection unit 300 and a center line 310Z of the cylinder 310 of the injection unit 300. The center line 310Z of the cylinder 310 extends in the axial direction of the cylinder 310. The split surface 304 of the injection unit 300 and the center line 310Z of the cylinder 310 of the injection unit 300 are parallel. The nozzle 320 is disposed on the center line 310Z of the cylinder 310.

As described above, the assembly method according to the embodiment includes the fixing step S202 and the parallelism adjustment step S205. In the fixing step S202, the injection unit 300A is separably fixed to the component fixing surface 62 of the attachment portion body 61. In the parallelism adjustment step S205, the component fixing surface 62 of the attachment portion body 61 is adjusted vertically.

The injection unit 300 in the related art is not divided from the attachment portion body 61 and cannot be separated from the attachment portion body 61. In order to separate the injection unit 300 from the slide base 302, the fixing bolt 71 of the adjustment bolt 70 is loosened and the loosened fixing bolt 71 is removed from the slide base 302.

The injection unit 300 according to the embodiment is separably fixed to the component fixing surface 62 of the attachment portion body 61. The component fixing surface 62 of the attachment portion body 61 is kept vertical from the separation step S206 to the re-fixing step S209. It is possible to set the center line 310Z of the cylinder 310 to be vertical simply by abutting the injection unit 300 to the vertical component fixing surface 62. Therefore, it is possible to reduce the frequency of work for adjusting the center line 310Z of the cylinder 310 vertically.

The injection unit 300B fixed in the re-fixing step S209 and the injection unit 300A separated in the separation step S206 are different. It is possible to perform the molding operation of the injection unit 300B at the molding place while the injection unit 300A is maintained at the maintenance place. Since the molding operation of another injection unit 300B is performed during the maintenance of the injection unit 300A, it is possible to prevent a decrease in a production speed of the molding product.

The injection unit 300B fixed in the re-fixing step S209 and the injection unit 300A separated in the separation step S206 have the same dimension C. It is possible to match a position in the X-axis direction of the nozzle 320 of the injection unit 300B after the replacement with the position in the X-axis direction of the nozzle 320 of the injection unit 300A before the replacement. It is possible to keep a positional relationship in the X-axis direction between the nozzle 320 and the injection port of the mold unit 800 before and after the replacement of the injection unit 300. Since the labor of alignment in the X-axis direction between the nozzle 320 and the injection port of the mold unit 800 can be saved, it is possible to reduce the labor of preparation from the replacement of the injection unit 300 to the restart of the molding operation.

The assembly method according to the embodiment includes the positioning step S201 and the re-positioning step S208. The same positioning portion 80 is used in both the positioning step S201 and the re-positioning step S208.

Therefore, for example, the position in the Y-axis direction of the injection unit 300A positioned in the positioning step S201 and the position in the Y-axis direction of the injection unit 300B positioned in the re-positioning step S208 can be set to be uniform. The positioning portion 80 can keep a positional relationship in the Y-axis direction between the nozzle 320 and the injection port of the mold unit 800 before and after the replacement of the injection unit 300. Since the labor of alignment in the Y-axis direction between the nozzle 320 and the injection port of the mold unit 800 can be saved, it is possible to reduce the labor of preparation from the replacement of the injection unit 300 to the restart of the molding operation.

Moreover, the position in the Z-axis direction of the injection unit 300A positioned in the positioning step S201 and the position in the Z-axis direction of the injection unit 300B positioned in the re-positioning step 5208 canbe set tobe uniform. The positioning portion 80 can keep a positional relationship in the Z-axis direction between the slide base 302 and the nozzle 320 that moves up and down together with the slide base 302 before and after the replacement of the injection unit 300. Since the labor of a setting change of the movement unit 400 that causes the nozzle 320 to move up and down can be omitted, it is possible to reduce the labor of preparation from the replacement of the injection unit 300 to the restart of the molding operation.

In the embodiment, the injection unit 300B fixed in the re-fixing step S209 and the injection unit 300A separated in the separation step S206 are different. However, the invention is not limited thereto. In a case where there is no substitute for the injection unit 300A separated in the separation step S206 in the storage place, the re-fixing step S209 is performed after the maintenance of the injection unit 300A separated in the separation step S206 ends. In the re-fixing step S209, the maintained injection unit 300A is separably fixed again to the component fixing surface 62 of the attachment portion body 61.

Next, a case where the injection unit 300A separated in the separation step S206 is fixed in the re-fixing step S209 will be described. In the case, the injection unit 300A fixed in the re-fixing step S209 is the same as the injection unit 300A separated in the separation step S206. Needless to say, the same injection unit 300A has the same dimension C. Therefore, it is possible to keep the positional relationship in the X-axis direction between the nozzle 320 and the injection port of the mold unit 800 before and after the maintenance. Moreover, the positioning portion 80 can keep the positional relationship in the Y-axis direction between the nozzle 320 and the injection port of the mold unit 800 before and after the maintenance. Moreover, the positioning portion 80 can keep the positional relationship in the Z-axis direction between the slide base 302 and the nozzle 320 that moves up and down together with the slide base 302 before and after the maintenance. Therefore, it is possible to reduce the labor of preparation until the molding operation is restarted.

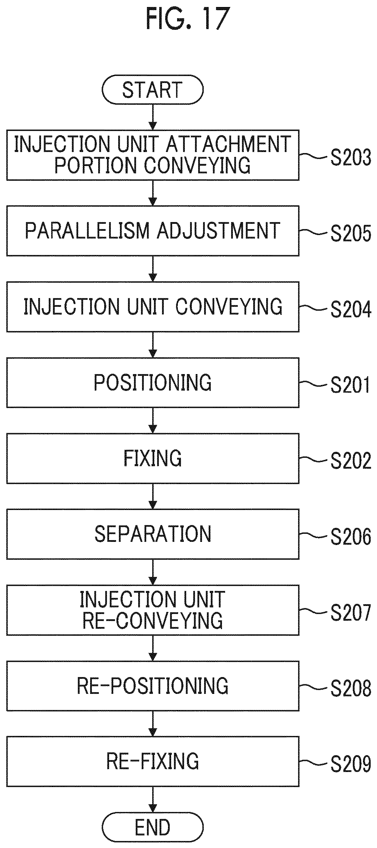

Fig. 17 is a flowchart showing a modification example of the assembly method shown in Fig. 14. The parallelism adjustment step S205 is performed after the fixing step S202 as shown in Fig. 14 in the assembly method according to the above embodiment, whereas the fixing step S202 is performed after the parallelism adjustment step S205 as shown in Fig. 17 in the assembly method according to the modification example.

As shown in Fig. 17, first, the injection unit attachment portion conveying step S203 is performed. In the injection unit attachment portion conveying step S203, for example, the injection molding machine body 11 is conveyed to the molding place in a state where the injection unit 300 is removed. Next, the parallelism adjustment step S205 is performed. In the parallelism adjustment step, the component fixing surface 62 of the attachment portion body 61 is adjusted vertically using the plurality of adjustment bolts 70.

Subsequently, the injection unit conveying step S204 is performed as shown in Fig. 17. In the injection unit conveying step S204, the injection unit 300 is conveyed to the molding place. Next, the positioning step S201 is performed. In the positioning step S201, the positioning portion 80 determines the position in the Y-axis direction and/or the position in the Z-axis direction of the injection unit 300 with respect to the component fixing surface 62 of the attachment portion body 61.

The injection unit conveying step S204 and the positioning step S201 may be performed in parallel. For example, the positioning portion 80 may determine the position in the Y-axis direction and/or the position in the Z-axis direction of the injection unit 300 while the injection unit 300 is suspended by a crane or the like. The fixing step S202 is performed after the injection unit conveying step S204 and the positioning step S201. In the fixing step S202, the injection unit 300 is separably fixed to the component fixing surface 62 of the attachment portion body 61.

Thereafter, the separation step S206, the injection unit re-conveying step S207, the re-positioning step S208, and the re-fixing step S209 are performed as shown in Fig. 17. Since the order of these steps S206 to S209 is the same as the order of the steps S206 to S209 shown in Fig. 14, a description thereof is omitted.

### (Modification Example and the like)

The assembly method of the injection molding machine, the embodiment of the injection molding machine, and the like have been described, but the invention is not limited to the above embodiment. Various changes, modifications, substitutions, additions, deletions, and combinations can be made within the scope of the claims. Needless to say, the above also belongs to the technical scope of the invention.

For example, in the above embodiment, the component fixing surface 62 of the attachment portion body 61 is, for example, the lateral side surface (more specifically, end surface in the X-axis direction) of the attachment portion body 61, but may be an upper surface (end surface in the Z-axis direction) of the attachment portion body 61. Hereinafter, differences between the assembly method of the injection unit 300 and the injection unit attachment portion 60 according to the modification example and the assembly method of the injection unit 300 and the injection unit attachment portion 60 according to the above embodiment will be mainly described.

As shown in Fig. 14, the assembly method of the injection unit 300 and the injection unit attachment portion 60 according to the modification example includes, for example, the positioning step S201, the fixing step S202, the injection unit attachment portion conveying step S203, the injection unit conveying step S204, the parallelism adjustment step S205, the separation step S206, the injection unit re-conveying step S207, the re-positioning step S208, and the re-fixing step S209. These steps S201 to S209 are performed in the order shown in Fig. 14 in the modification example, but the order is not particularly limited. For example, these steps S201 to S209 may be performed in the order shown in Fig. 17.

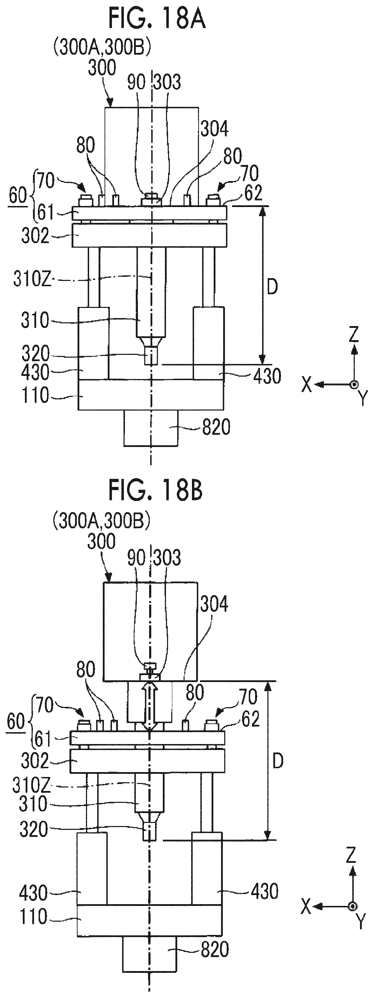

Figs. 18A and 18B are views showing a fixed state and a separated state of an injection unit according to the modification example. Fig. 18A is the view showing the fixed state of the injection unit according to the modification example. Fig. 18B is the view showing the separated state of the injection unit according to the modification example. The injection unit 300 is fixed to the slide base 302 through the injection unit attachment portion 60. A hydraulic cylinder 430 is disposed between the slide base 302 and the upper platen 110. The hydraulic cylinder 430 causes the slide base 302 to move up and down to cause the attachment portion body 61 and the injection unit 300 to move up and down. The hydraulic cylinder 430 constitutes the movement unit 400. The injection unit attachment portion 60 includes the attachment portion body 61 having the component fixing surface 62 to which the injection unit 300 is separably fixed and the adjustment bolt 70 that adjusts the parallelism between the component fixing surface 62 and the horizontal surface. The adjustment bolt 70 connects the attachment portion body 61 and the slide base 302.

In the positioning step S201, the positioning portion 80 determines a position in the X-axis direction and/or a position in the Y-axis direction of the injection unit 300 with respect to the component fixing surface 62 of the attachment portion body 61. The positioning portion 80 is formed on the component fixing surface 62 of the attachment portion body 61 and is formed, for example, in a projected shape on the component fixing surface 62.

The positioning portion 80 abuts the end surface in the X-axis direction of the injection unit 300 to the positioning portion 80 to position the position in the X-axis direction of the injection unit 300. The position in the X-axis direction of the injection unit 300 is determined such that the position in the X-axis direction of the nozzle 320 matches the position in the X-axis direction of the injection port of the mold unit 800. Moreover, the positioning portion 80 abuts the end surface in the Y-axis direction of the injection unit 300 to the positioning portion 80 to position the position in the Y-axis direction of the injection unit 300.

In the modification example, the positioning portion 80 abuts against the end surface in the X-axis direction and/or the end surface in the Y-axis direction of the injection unit 300, but may be fitted to the end surface in the Z-axis direction of the injection unit 300. The end surface in the Z-axis direction of the injection unit 300 is the split surface 304 with the attachment portion body 61 of the injection unit 300. For example, a recessed portion is formed on the split surface 304 of the injection unit 300, and the recessed portion is fitted to the positioning portion 80.

In the fixing step S202, the injection unit 300 is separably fixed to the component fixing surface 62 of the attachment portion body 61. For example, the fixing bolt 90 is used as the fixing portion that separably fixes the injection unit 300 to the component fixing surface 62.

In the injection unit attachment portion conveying step S203, the injection unit attachment portion 60 is conveyed. Moreover, in the injection unit conveying step S204, the injection unit 300 is conveyed. In the embodiment, the injection unit 300 is separably fixed to the injection unit attachment portion 60 before these steps S203 and S204. Therefore, the injection unit attachment portion 60 and the injection unit 300 are collectively conveyed to the molding place.

In the parallelism adjustment step S205, the parallelism with respect to the reference surface of the component fixing surface 62 of the attachment portion body 61 is adjusted using the plurality of adjustment bolts 70. The component fixing surface 62 of the attachment portion body 61 is a surface to which the injection unit 300 is separably fixed. The component fixing surface 62 of the attachment portion body 61 is, for example, the upper surface of the attachment portion body 61. The attachment portion body 61 is a flat surface. The reference surface is a virtual plane. The reference surface is, for example, the horizontal surface.

In the separation step S206, the injection unit 300 fixed in the fixing step S202 is separated from the component fixing surface 62 of the attachment portion body 61. The separation step S206 is performed after the fixing step S202. The separation step S206 is performed, for example, when the injection unit 300 fixed in the fixing step S105 fails. The failed injection unit 300 is conveyed from the molding place to the maintenance place and maintained at the maintenance place. Thereafter, the maintained injection unit 300 is conveyed from the maintenance place to the storage place and stored in the storage place. The maintenance place may also serve as the storage place.

In the injection unit re-conveying step S207, the injection unit 300 is conveyed to the component fixing surface 62 of the attachment portion body 61. The injection unit 300 is assembled in advance in another place and stored in the storage place and is conveyed from the storage place to the molding place.

In the re-positioning step S208, the positioning portion 80 determines the position in the X-axis direction and/or the position in the Y-axis direction of the injection unit 300 with respect to the component fixing surface 62 of the attachment portion body 61. The positioning portion 80 is formed on the component fixing surface 62 of the attachment portion body 61 and is formed, for example, in a projected shape on the component fixing surface 62.

In the re-fixing step S209, the injection unit 300 is separably fixed to the component fixing surface 62 of the attachment portion body 61. The injection unit 300B fixed in the re-fixing step S209 and the injection unit 300A separated in the separation step S206 have the same dimension D. The dimension D is a distance in the Z-axis direction between the split surface 304 of the injection unit 300 and a lower end of the nozzle 320 of the injection unit 300. The split surface 304 of the injection unit 300 and the center line 310Z of the cylinder 310 of the injection unit 300 are perpendicular. The center line 310Z of the cylinder 310 extends in the axial direction of the cylinder 310.

As described above, the assembly method according to the modification example includes the fixing step S202 and the parallelism adjustment step S205. In the fixing step S202, the injection unit 300A is separably fixed to the component fixing surface 62 of the attachment portion body 61. In the parallelism adjustment step S205, the component fixing surface 62 of the attachment portion body 61 is adjusted horizontally.

The injection unit 300 in the related art is not divided from the attachment portion body 61 and cannot be separated from the attachment portion body 61. In order to separate the injection unit 300 from the slide base 302, the fixing bolt 71 of the adjustment bolt 70 is loosened and the loosened fixing bolt 71 is removed from the slide base 302.

The injection unit 300 according to the modification example is separably fixed to the component fixing surface 62 of the attachment portion body 61. The component fixing surface 62 of the attachment portion body 61 is kept horizontal from the separation step S206 to the re-fixing step S209. It is possible to set the center line 310Z of the cylinder 310 to be vertical simply by abutting the injection unit 300 to the horizontal component fixing surface 62. Therefore, it is possible to reduce the frequency of work for adjusting the center line 310Z of the cylinder 310 vertically.

The injection unit 300B fixed in the re-fixing step S209 and the injection unit 300A separated in the separation step S206 are different. It is possible to perform the molding operation of the injection unit 300B at the molding place while the injection unit 300A is maintained at the maintenance place. Since the molding operation of another injection unit 300B is performed during the maintenance of the injection unit 300A, it is possible to prevent a decrease in a production speed of the molding product.

The injection unit 300B fixed in the re-fixing step S209 and the injection unit 300A separated in the separation step S206 have the same dimension D. It is possible to keep the positional relationship in the Z-axis direction between the slide base 302 and the nozzle 320 that moves up and down together with the slide base 302 before and after the replacement of the injection unit 300.
Since the setting change of the movement unit 400 that causes the nozzle 320 to move up and down can be omitted, it is possible to reduce the labor of preparation from the replacement of the injection unit 300 to the restart of the molding operation.

The assembly method according to the modification example includes the positioning step S201 and the re-positioning step S208. The same positioning portion 80 is used in both the positioning step S201 and the re-positioning step S208.

Therefore, for example, the position in the X-axis direction of the injection unit 300A positioned in the positioning step S201 and the position in the X-axis direction of the injection unit 300B positioned in the re-positioning step S208 can be set to be uniform. The positioning portion 80 can keep the positional relationship in the X-axis direction between the nozzle 320 and the injection port of the mold unit 800 before and after the replacement of the injection unit 300. Since the labor of alignment in the X-axis direction between the nozzle 320 and the injection port of the mold unit 800 can be saved, it is possible to reduce the labor of preparation from the replacement of the injection unit 300 to the restart of the molding operation.

Moreover, the position in the Y-axis direction of the injection unit 300A positioned in the positioning step S201 and the position in the Y-axis direction of the injection unit 300B positioned in the re-positioning step S208 can be set to be uniform. The positioning portion 80 can keep the positional relationship in the Y-axis direction between the nozzle 320 and the injection port of the mold unit 800 before and after the replacement of the injection unit 300. Therefore, since the labor of alignment in the Y-axis direction between the nozzle 320 and the injection port of the mold unit 800 can be saved, it is possible to reduce the labor of preparation from the replacement of the injection unit 300 to the restart of the molding operation.

In the modification example, the injection unit 300B fixed in the re-fixing step S209 and the injection unit 300A separated in the separation step S206 are different, but the invention is not limited thereto. In the case where there is no substitute for the injection unit 300A separated in the separation step S206 in the storage place, the re-fixing step S209 is performed after the maintenance of the injection unit 300A separated in the separation step S206 ends. In the re-fixing step S209, the maintained injection unit 300A is separably fixed again to the component fixing surface 62 of the attachment portion body 61.

Next, a case where the injection unit 300A separated in the separation step S206 is fixed in the re-fixing step S209 will be described. In the case, the injection unit 300A fixed in the re-fixing step S209 is the same as the injection unit 300A separated in the separation step S206. Needless to say, the same injection unit 300A has the same dimension D. Therefore, it is possible to keep the positional relationship in the Z-axis direction between the slide base 302 and the nozzle 320 that moves up and down together with the slide base 302 before and after the maintenance. Moreover, the positioning portion 80 can keep the positional relationship in the X-axis direction between the nozzle 320 and the injection port of the mold unit 800 before and after the maintenance. Moreover, the positioning portion 80 can keep the positional relationship in the Y-axis direction between the nozzle 320 and the injection port of the mold unit 800 before and after the maintenance. Therefore, it is possible to reduce the labor of preparation until the molding operation is restarted.

The invention is set out in the appended set of claims.

### Brief Description of the Reference Symbols

- 10:: injection molding machine
- 11:: injection molding machine body
- 20:: frame mounting portion
- 21:: mounting portion body
- 22:: component fixing surface
- 30:: leveling adjuster (parallelism adjustment portion)
- 40:: positioning portion
- 50:: fixing bolt (fixing portion)
- 60:: injection unit attachment portion
- 61:: attachment portion body
- 62:: component fixing surface
- 70:: adjustment bolt
- 80:: positioning portion
- 90:: fixing bolt (fixing portion)
- 900:: frame
- 910:: mold clamping unit frame

## Claims

1. An assembly method of an injection molding machine (10), said injection molding machine (10) comprising:
an injection molding machine body (11) including a frame (900); and
a frame mounting portion (20) including a mounting portion body (21) having a component fixing surface (22) to which the frame (900) of the injection molding machine body (11) is separably fixed, **characterised by** a plurality of adjuster attachment portions (25) provided at intervals along an outer periphery of the mounting portion body (21), and a plurality of leveling adjuster (30) configured to be installed on a floor surface (2) and respectively attached to the plurality of adjuster attachment portion (25), and to adjust a parallelism between the component fixing surface (22) and a horizontal surface,
wherein the method comprises
a parallelism adjustment step of adjusting a parallelism of the component fixing surface (22) with respect to a reference surface; and
a fixing step of separably fixing the frame (900) of the injection molding machine body (11) to the component fixing surface (22).

2. The assembly method of an injection molding machine (10) according to claim 1, said injection molding machine (10) further comprising:
an injection unit (300); and
an injection unit attachment portion (60) including an attachment portion body (61) having a further component fixing surface (62) to which the injection unit (300) is separably fixed, and a parallelism adjustment portion in the form of an adjustment bolt (70) that adjusts a parallelism between the further component fixing surface (62) and a vertical surface,
wherein the injection unit (300) is fixed to a slide base (302) through the injection unit attachment portion (60), and
wherein the method comprises
a further parallelism adjustment step of adjusting a parallelism of the further component fixing surface (62) to which the injection unit (300) is fixed with respect to a further reference surface; and
a further fixing step of separably fixing the injection unit (300) to the further component fixing surface (62).

3. The assembly method of an injection molding machine (10) according to claim 1 or 2, further comprising:
a separation step of separating a component of the injection molding machine (10) fixed in the fixing step or the further fixing step from the component fixing surface (22) or the further component fixing surface (62).

4. The assembly method of an injection molding machine (10) according to claim 3, further comprising:
a re-fixing step of separably fixing the component of the injection molding machine (10) to the component fixing surface (22) or the further component fixing surface (62) after the separation step.

5. The assembly method of an injection molding machine (10) according to claim 4, further comprising:
a positioning step of determining a position of the component of the injection molding machine (10) to be fixed to the component fixing surface (22) or the further component fixing surface (62) in the fixing step or the further fixing step in a direction parallel to the reference surface or the further reference surface by a positioning portion (40, 80) before the fixing step or the further fixing step; and
a re-positioning step of determining a position of the component of the injection molding machine (10) in the direction parallel to the reference surface or the further reference surface by the positioning portion (40, 80) after the separation step and before the re-fixing step.

6. The assembly method of an injection molding machine (10) according to any one of claims 1 to 5,
wherein the reference surface is a horizontal surface, and
wherein the component fixing surface (22) is an upper surface of the frame mounting portion (20) on which one or more mold clamping unit frames (910) are mounted.

7. The assembly method of an injection molding machine (10) according to any one of claims 2 to 5,
wherein the further reference surface is a vertical surface, and
wherein the further component fixing surface (62) is a lateral side surface of the attachment portion body (61) to which a vertical injection unit (300) is attached.

8. The assembly method of an injection molding machine (10) according to any one of claims 1 to 5,
wherein the further reference surface is a horizontal surface, and
wherein the further component fixing surface (62) is an upper surface of the attachment portion body (61) to which a vertical injection unit (300) is attached.

9. An injection molding machine (10) comprising:
an injection molding machine body (11) including a frame (900); and
a frame mounting portion (20) including a mounting portion body (21) having a component fixing surface (22) to which the frame (900) of the injection molding machine body (11) is separably fixed, **characterised by** a plurality of adjuster attachment portions (25) provided at intervals along an outer periphery of the mounting portion body (21), and a plurality of parallelism adjustment portions (30) configured to be installed on a floor surface (2) and respectively attached to the plurality of adjuster attachment portions (25), and to adjust a parallelism between the component fixing surface (22) and a horizontal surface,
wherein the frame mounting portion (20) includes
the parallelism adjustment portion (30) configured to adjust a parallelism of the fixing surface (22) with respect to a reference surface; and
a fixing portion (50) that separably fixes the frame (900) of the injection molding machine body (11) to the fixing surface (22).

10. The injection molding machine (10) according to claim 9, further comprising:
an injection unit (300); and
an injection unit attachment portion (60) including an attachment portion body (61) having a further component fixing surface (62) to which the injection unit (300) is separably fixed,
wherein the injection unit (300) is fixed to a slide base (302) through the injection unit attachment portion (60), and
wherein the injection unit attachment portion (60) includes
a further parallelism adjustment portion in the form of an adjustment bolt (70) that adjusts a parallelism of the further component fixing surface (62) to which the injection unit (300) is fixed with respect to a further reference surface; and
a fixing portion (90) that separably fixes the injection unit (300) to the further component fixing surface (62).

11. The injection molding machine (10) according to claim 9 or 10, further comprising:
a positioning portion (40, 80) that determines a position of a component of the injection molding machine (10) with respect to the component fixing surface (22) or the further component fixing surface (62) in a direction parallel to the reference surface.

## Patentansprüche

1. Verfahren zur Montage einer Spritzgießmaschine (10), wobei die Spritzgießmaschine (10) umfasst:
einen Spritzgießmaschinenkörper (11), der einen Rahmen (900) umfasst; und
einen Rahmenmontageabschnitt (20), der einen Montageabschnittskörper (21) mit einer Komponentenbefestigungsfläche (22), an der der Rahmen (900) des Spritzgießmaschinenkörpers (11) lösbar befestigt ist, aufweist, **gekennzeichnet durch**
mehrere Anpassungsvorrichtungsanbringungsabschnitte (25), die in Abständen entlang eines Außenumfangs des Montageabschnittskörpers (21) vorgesehen sind, und mehrere Nivellieranpassungsvorrichtungen (30), die so konfiguriert sind, dass sie auf einer Bodenfläche (2) installiert und jeweils an den mehreren Anpassungsvorrichtungsanbringungsabschnitten (25) angebracht werden, und um eine Parallelität zwischen der Komponentenbefestigungsfläche (22) und einer horizontalen Fläche anzupassen,
wobei das Verfahren umfasst
einen Parallelitätsanpassungsschritt zum Anpassen einer Parallelität der Komponentenbefestigungsfläche (22) in Bezug auf eine Referenzfläche; und
einen Befestigungsschritt zum lösbaren Befestigen des Rahmens (900) des Spritzgießmaschinenkörpers (11) an der Komponentenbefestigungsfläche (22).

2. Verfahren zur Montage einer Spritzgießmaschine (10) nach Anspruch 1, wobei die Spritzgießmaschine (10) ferner umfasst:
eine Einspritzeinheit (300); und
einen Einspritzeinheitanbringungsabschnitt (60), der einen Anbringungsabschnittskörper (61) mit einer weiteren Komponentenbefestigungsfläche (62) aufweist, an der die Einspritzeinheit (300) lösbar befestigt ist, sowie einen Parallelitätsanpassungsabschnitt in der Form einer Anpassungsschraube (70), die eine Parallelität zwischen der weiteren Komponentenbefestigungsfläche (62) und einer vertikalen Fläche anpasst,
wobei die Einspritzeinheit (300) an einer Gleitbasis (302) über den Einspritzeinheitanbringungsabschnitt (60) befestigt ist, und
wobei das Verfahren umfasst
einen weiteren Parallelitätsanpassungsschritt zum Anpassen einer Parallelität der weiteren Komponentenbefestigungsfläche (62), an der die Einspritzeinheit (300) befestigt ist, in Bezug auf eine weitere Referenzfläche; und
einen weiteren Befestigungsschritt zum lösbaren Befestigen der Einspritzeinheit (300) an der weiteren Komponentenbefestigungsfläche (62).

3. Verfahren zur Montage einer Spritzgießmaschine (10) nach Anspruch 1 oder 2, ferner umfassend:
einen Schritt des Lösens zum Lösen einer Komponente der Spritzgießmaschine (10), die bei dem Befestigungsschritt oder dem weiteren Befestigungsschritt befestigt wurde, von der Komponentenbefestigungsfläche (22) oder der weiteren Komponentenbefestigungsfläche (62).

4. Verfahren zur Montage einer Spritzgießmaschine (10) nach Anspruch 3, ferner umfassend:
einen erneuten Befestigungsschritt zum lösbaren Befestigen der Komponente der Spritzgießmaschine (10) an der Komponentenbefestigungsfläche (22) oder der weiteren Komponentenbefestigungsfläche (62) nach dem Schritt des Lösens.

5. Verfahren zur Montage einer Spritzgießmaschine (10) nach Anspruch 4, ferner umfassend:
einen Positionierungsschritt zum Bestimmen einer Position der Komponente der Spritzgießmaschine (10), die an der Komponentenbefestigungsfläche (22) oder der weiteren Komponentenbefestigungsfläche (62) bei dem Befestigungsschritt oder dem weiteren Befestigungsschritt in einer Richtung parallel zu der Referenzfläche oder zu der weiteren Referenzfläche durch einen Positionierungsabschnitt (40, 80) vor dem Befestigungsschritt oder dem weiteren Befestigungsschritt, befestigt werden soll; und
einem erneuten Positionierungsschritt zum Bestimmen einer Position der Komponente der Spritzgießmaschine (10) in der Richtung parallel zu der Referenzfläche oder der weiteren Referenzfläche durch den Positionierungsabschnitt (40, 80) nach dem Schritt des Lösens und vor dem erneuten Befestigungsschritt.

6. Verfahren zur Montage einer Spritzgießmaschine (10) nach einem der Ansprüche 1 bis 5,
wobei die Referenzfläche eine horizontale Fläche ist und
wobei die Komponentenbefestigungsfläche (22) eine obere Fläche des Rahmenmontageabschnitts (20) ist, an der ein oder mehrere Formschließeinheit-Rahmen (910) montiert werden.

7. Verfahren zur Montage einer Spritzgießmaschine (10) nach einem der Ansprüche 2 bis 5,
wobei die weitere Referenzfläche eine vertikale Fläche ist und
wobei die weitere Komponentenbefestigungsfläche (62) eine laterale Seitenfläche des Anbringungsabschnittskörpers (61), an dem eine vertikale Spritzeinheit (300) angebracht wird, ist.

8. Verfahren zur Montage einer Spritzgießmaschine (10) nach einem der Ansprüche 1 bis 5,
wobei die weitere Referenzfläche eine horizontale Fläche ist, und
wobei die weitere Komponentenbefestigungsfläche (62) eine obere Fläche des Anbringungsabschnittskörpers (61), an der eine vertikale Einspritzeinheit (300) angebracht wird, ist.

9. Spritzgießmaschine (10), umfassend:
einen Spritzgießmaschinenkörper (11) umfassend einen Rahmen (900); und
einen Rahmenmontageabschnitt (20), umfassend einen Montageabschnittskörper (21), der eine Komponentenbefestigungsfläche (22) aufweist, an der der Rahmen (900) des Spritzgießmaschinenkörpers (11) lösbar befestigt ist, **dadurch gekennzeichnet, dass**
mehrere Anpassungsvorrichtungsanbringungsabschnitte (25), die in Abständen entlang eines Außenumfangs des Montageabschnittskörpers (21) vorgesehen sind, und mehrere Parallelitätsanpassungsabschnitte (30), die so konfiguriert sind, dass sie auf einer Bodenfläche (2) installiert sind und jeweils an den mehreren Anpassungsvorrichtungsanbringungsabschnitten (25) angebracht sind, und um eine Parallelität zwischen der Komponentenbefestigungsfläche (22) und einer horizontalen Fläche anzupassen,
wobei der Rahmenmontageabschnitt (20) umfasst
den Parallelitätsanpassungsabschnitt (30), der so konfiguriert ist, dass er eine Parallelität der Befestigungsfläche (22) in Bezug auf eine Referenzfläche anpasst; und
einen Befestigungsabschnitt (50), der den Rahmen (900) des Spritzgießmaschinenkörpers (11) lösbar an der Befestigungsfläche (22) befestigt.

10. Spritzgießmaschine (10) nach Anspruch 9, ferner umfassend:
eine Einspritzeinheit (300); und
einen Einspritzeinheitanbringungsabschnitt (60), umfassend einen Anbringungsabschnittskörper (61), der eine weitere Komponentenbefestigungsfläche (62) aufweist, an der die Einspritzeinheit (300) lösbar befestigt ist,
wobei die Einspritzeinheit (300) an einer Gleitbasis (302) über den Einspritzeinheitanbringungsabschnitt (60) befestigt ist, und
wobei der Einspritzeinheitanbringungsabschnitt (60) umfasst
einen weiteren Parallelitätsanpassungsabschnitt in der Form einer Anpassungsschraube (70), die eine Parallelität der weiteren Komponentenbefestigungsfläche (62), an der die Einspritzeinheit (300) befestigt ist, in Bezug auf eine weitere Referenzfläche anpasst; und
einen Befestigungsabschnitt (90), der die Einspritzeinheit (300) lösbar an der weiteren Komponentenbefestigungsfläche (62) befestigt.

11. Spritzgießmaschine (10) nach Anspruch 9 oder 10, ferner umfassend:
einen Positionierabschnitt (40, 80), der eine Position einer Komponente der Spritzgießmaschine (10) in Bezug auf die Komponentenbefestigungsfläche (22) oder die weitere Komponentenbefestigungsfläche (62) in einer Richtung parallel zu der Referenzfläche, bestimmt.

## Revendications

1. Une méthode d'assemblage d'une machine de moulage par injection (10), ladite machine de moulage par injection (10) comprenant :
un corps de machine de moulage par injection (11) comprenant un bâti (900) ; et
une partie de montage de bâti (20) comprenant un corps de partie de montage (21) ayant une surface de fixation de composant (22) sur laquelle le bâti (900) du corps de machine de moulage par injection (11) est fixé de manière séparable, **caractérisé par**
une pluralité de parties de fixation de régleur (25) prévues à intervalles le long d'une périphérie externe du corps de partie de montage (21), et une pluralité de régleurs de nivellement (30) configurés pour être installés sur une surface de sol (2) et respectivement fixés à la pluralité de parties de fixation de régleur (25), et pour régler un parallélisme entre la surface de fixation de composant (22) et une surface horizontale,
dans lequel le procédé comprend :
une étape de réglage de parallélisme pour régler un parallélisme de la surface de fixation de composant (22) par rapport à une surface de référence ; et
une étape de fixation pour fixer de manière séparable le bâti (900) du corps de machine de moulage par injection (11) à la surface de fixation de composant (22).

2. La méthode d'assemblage d'une machine de moulage par injection (10) selon la revendication 1, ladite machine de moulage par injection (10) comprenant en outre :
une unité d'injection (300) ; et
une partie de fixation d'unité d'injection (60) comprenant un corps de partie de fixation (61) ayant une surface de fixation de composant supplémentaire (62) à laquelle l'unité d'injection (300) est fixée de manière séparable, et une partie de réglage de parallélisme se présentant sous la forme d'un boulon de réglage (70) qui règle un parallélisme entre la surface de fixation de composant supplémentaire (62) et une surface verticale,
dans lequel l'unité d'injection (300) est fixée à une base de coulissement (302) par l'intermédiaire de la partie de fixation d'unité d'injection (60), et
dans lequel la méthode comprend :
une autre étape de réglage de parallélisme pour régler un parallélisme de la surface de fixation de composant supplémentaire (62) à laquelle l'unité d'injection (300) est fixée par rapport à une surface de référence supplémentaire ; et
une autre étape de fixation pour fixer de manière séparable l'unité d'injection (300) à la surface de fixation de composant supplémentaire (62).

3. La méthode d'assemblage d'une machine de moulage par injection (10) selon la revendication 1 ou 2, comprenant en outre :
une étape de séparation pour séparer un composant de la machine de moulage par injection (10) fixé lors de l'étape de fixation ou lors de l'autre étape de fixation de la surface de fixation de composant (22) ou de la surface de fixation de composant supplémentaire (62).

4. La méthode d'assemblage d'une machine de moulage par injection (10) selon la revendication 3, comprenant en outre :
une étape de refixation pour fixer de manière séparable le composant de la machine de moulage par injection (10) à la surface de fixation de composant (22) ou à la surface de fixation de composant supplémentaire (62) après l'étape de séparation.

5. La méthode d'assemblage d'une machine de moulage par injection (10) selon la revendication 4, comprenant en outre :
une étape de positionnement pour déterminer une position du composant de la machine de moulage par injection (10) à fixer à la surface de fixation de composant (22) ou à la surface de fixation de composant supplémentaire (62) lors de l'étape de fixation ou lors de l'autre étape de fixation dans une direction parallèle à la surface de référence ou à la surface de référence supplémentaire au moyen d'une partie de positionnement (40, 80) avant l'étape de fixation ou l'autre étape de fixation ; et
une étape de repositionnement pour déterminer une position du composant de la machine de moulage par injection (10) dans la direction parallèle à la surface de référence ou à la surface de référence supplémentaire au moyen de la partie de positionnement (40, 80) après l'étape de séparation et avant l'étape de refixation.

6. La méthode d'assemblage d'une machine de moulage par injection (10) selon l'une quelconque des revendications 1 à 5,
dans lequel la surface de référence est une surface horizontale, et
dans lequel la surface de fixation de composant (22) est une surface supérieure de la partie de montage de bâti (20) sur laquelle un ou plusieurs bâtis d'unité de serrage de moule (910) sont montés.

7. La méthode d'assemblage d'une machine de moulage par injection (10) selon l'une quelconque des revendications 2 à 5,
dans lequel la surface de référence supplémentaire est une surface verticale, et
dans lequel la surface de fixation de composant supplémentaire (62) est une surface latérale du corps de partie de fixation (61) à laquelle une unité d'injection verticale (300) est fixée.

8. La méthode d'assemblage d'une machine de moulage par injection (10) selon l'une quelconque des revendications 1 à 5,
dans lequel la surface de référence supplémentaire est une surface horizontale, et
dans lequel la surface de fixation de composant supplémentaire (62) est une surface supérieure du corps de partie de fixation (61) à laquelle une unité d'injection verticale (300) est fixée.

9. Une machine de moulage par injection (10) comprenant :
un corps de machine de moulage par injection (11) comprenant un bâti (900) ; et
une partie de montage de bâti (20) comprenant un corps de partie de montage (21) ayant une surface de fixation de composant (22) à laquelle le bâti (900) du corps de machine de moulage par injection (11) est fixé de manière séparable, **caractérisée par** une pluralité de parties de fixation de régleur (25) prévues à intervalles le long d'une périphérie extérieure du corps de partie de montage (21), et une pluralité de parties de réglage de parallélisme (30) configurées pour être installées sur une surface de sol (2) et respectivement fixées à la pluralité de parties de fixation de régleur (25), et pour régler un parallélisme entre la surface de fixation de composant (22) et une surface horizontale,
dans laquelle la partie de montage de bâti (20) comprend :
la partie de réglage de parallélisme (30) configurée pour régler un parallélisme de la surface de fixation (22) par rapport à une surface de référence ; et
une partie de fixation (50) qui fixe de manière séparable le bâti (900) du corps de machine de moulage par injection (11) à la surface de fixation (22).

10. La machine de moulage par injection (10) selon la revendication 9, comprenant en outre :
une unité d'injection (300) ; et
une partie de fixation d'unité d'injection (60) comprenant un corps de partie de fixation (61) ayant une surface de fixation de composant supplémentaire (62) à laquelle l'unité d'injection (300) est fixée de manière séparable,
dans laquelle l'unité d'injection (300) est fixée à une base de coulissement (302) par l'intermédiaire de la partie de fixation d'unité d'injection (60), et
dans laquelle la partie de fixation d'unité d'injection (60) comprend :
une partie de réglage de parallélisme supplémentaire se présentant sous la forme d'un boulon de réglage (70) qui règle un parallélisme de la surface de fixation de composant supplémentaire (62) à laquelle l'unité d'injection (300) est fixée par rapport à une surface de référence supplémentaire ; et
une partie de fixation (90) qui fixe de manière séparable l'unité d'injection (300) à la surface de fixation de composant supplémentaire (62).

11. La machine de moulage par injection (10) selon la revendication 9 ou 10, comprenant en outre :
une partie de positionnement (40, 80) qui détermine une position d'un composant de la machine de moulage par injection (10) par rapport à la surface de fixation de composant (22) ou à la surface de fixation de composant supplémentaire (62) dans une direction parallèle à la surface de référence.
